(19)

**Europäisches Patentamt**
**European Patent Office**
**Office européen des brevets**

(11) **EP 4 786 294 A1**

(12) **EUROPEAN PATENT APPLICATION**

(43) Date of publication:
05.08.2026 Bulletin 2026/32

(21) Application number: 25220863.2

(22) Date of filing: 04.12.2025

(51) International Patent Classification (IPC):
*B60W 30/095* (2012.01) *B60W 60/00* (2020.01)

(52) Cooperative Patent Classification (CPC):
**B60W 60/0021; B60W 30/095; B60W 60/0011; B60W 60/0015; G05B 13/04;** B60W 30/0953; B60W 30/0956; B60W 2050/0031; B60W 2554/4041; B60W 2554/4042

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 31.01.2025 GB 202501441

(71) Applicant: AUMOVIO Germany GmbH
60488 Frankfurt am Main (DE)

(72) Inventors:
• **Bouzidi, Mohamed-Khalil**
**60488 Frankfurt (DE)**
• **Reichardt, Jörg**
**60488 Frankfurt am Main (DE)**

(74) Representative: **Aumovio Corporation**
**AUMOVIO Germany GmbH**
**Taunusstraße 36**
**80807 München (DE)**

(54) **A METHOD, APPARATUS, AND COMPUTER-READABLE MEDIUM FOR BRANCH MODEL PREDICTIVE CONTROL IN AUTONOMOUS NAVIGATION**

(57) Embodiments of the present disclosure relate to methods for autonomous navigation and for enhancing the performance of a model predictive control, BMPC. A computer program, a computer-readable data carrier and an apparatus are also disclosed. The BMPC being configured to generate control commands to an autonomous system over successive control intervals. The method for autonomous navigation using the BMPC comprises: obtaining, for each control interval, candidate navigation corridors for the autonomous system; obtaining, using backward reachability analysis, respective backward reachable navigation corridors for at least two of the candidate navigation corridors; obtaining, for each control interval, a highest-progress corridor and a lowest-progress corridor from the backward reachable navigation corridors, wherein the highest-progress corridor is associated with the backward reachable navigation corridor where the autonomous system makes most longitudinal progress, and the lowest-progress corridor is associated with the backward reachable navigation corridor where the autonomous system makes least longitudinal progress; and

FIG 1

100

obtaining, from a multimodal predictor, one or more candidate trajectories for traffic participants — 110

obtaining, using reachability analysis, respective candidate navigation corridors for each candidate trajectory — 120

obtaining, for each candidate trajectory, a cumulated area of each of the respective candidate navigation corridors — 130

classifying, for each candidate trajectory, a candidate navigation corridor having a greatest cumulated area as relevant corridor, thereby obtaining a class of relevant corridors — 140

obtaining an overlap score between each pair of relevant corridors in the class of relevant corridors — 150

determining that at least one obtained overlap score, corresponding to at least one pair of the relevant corridors, exceeds a predetermined threshold — 160

replacing, in the class of relevant corridors, each pair of the at least one pair of the relevant corridors with an intersection of said each pair, thereby obtaining an updated class of relevant corridors. — 170

using, by a branch model predictive control, BMPC, the updated class of relevant corridors for generating a predicted trajectory and control commands to an autonomous system — 180

EP 4 786 294 A1

**Description**

The present disclosure relates to autonomous navigation. In particular, the present disclosure relates to decision postponing time calculation for branch model predictive control used for autonomous driving.

In the context of autonomous driving, the prediction of future behavior of traffic participants (such as pedestrians, cyclists, and other vehicles) is loaded with uncertainty. This uncertainty stems from the fact that traffic participants (TPs) exhibit a wide variety of potential behaviors in any given scenario, influenced by various factors such as road conditions, traffic rules, driver intent, and environmental stimuli. As such, it is crucial for autonomous vehicles to be able to predict and adapt to these potential behaviors in real-time, ensuring safe navigation within dynamic traffic environments.

Traditional trajectory prediction models have primarily relied on single-mode predictions, which assume a single, deterministic future path for each traffic participant. However, this approach fails to capture the inherent multimodal nature of real-world driving scenarios, where a traffic participant may follow multiple potential trajectories depending on contextual variables. To address this limitation, state-of-the-art trajectory predictors now generate multimodal predictions, considering a range of possible future behaviors. These predictions are typically probabilistic in nature, encompassing several potential modes that reflect different possible outcomes.

In parallel with trajectory prediction, motion planning is a critical component of autonomous driving systems. Motion planners, such as the Branch Model Predictive Control (BMPC), are responsible for determining the optimal trajectory for the vehicle, considering the predicted trajectories of surrounding traffic participants, as well as the vehicle's own motion capabilities and safety constraints. However, for the motion planner to ensure safety and comfort, it must account for the full range of potential outcomes, including all possible deviations in the predicted trajectories of other traffic participants.

In the context of autonomous driving, the prediction of traffic participant behavior is inherently multimodal, meaning that for any given situation, multiple potential outcomes may exist. These outcomes, also referred to as modes of traffic participant behavior, must be considered by the motion planner in order to ensure safe and efficient operation of the autonomous vehicle. A common approach for modeling these uncertainties is through the use of a BMPC comprising a scenario tree, which represents the different possible futures of all traffic participants within a given timeframe. Each branch of the scenario tree corresponds to a potential outcome, and the branches are generated based on the predicted behavior (e.g. trajectories) of each traffic participant.

However, as the number of traffic participants increases, the size of the scenario tree grows exponentially, as the number of possible combinations of traffic participant behaviors (e.g. predicted trajectories) increases. This exponential growth leads to a significant increase in the computational complexity of solving the BMPC optimization problem. As the size of the tree expands, the time required to solve the optimization problem increases, making real-time applications of the BMPC increasingly infeasible.

Therefore, it becomes essential to implement pruning techniques to reduce the size of the scenario tree while still maintaining safety and reliability.

Due to the computational limitations inherent in BMPC, it is common practice to set a threshold that ignores low-probability scenarios (e.g., those with a probability of occurrence below a certain value, such as 5%). While this approach can help reduce the size of the scenario tree and improve computational efficiency, it may introduce significant safety risks. This is because even low-probability events, when aggregated across multiple TPs, could represent a non-negligible risk. For example, if 5% of participants are predicted to choose a particular action in a given situation, neglecting those scenarios might omit critical outcomes, potentially overlooking dangerous behaviors such as unexpected lane changes, sudden braking, or other rare but high-risk actions. Ignoring such probabilities may therefore lead to an unsafe trajectory planning in autonomous driving, as the vehicle may fail to account for rare but hazardous events that could otherwise result in collisions or other dangerous situations.

The underlying assumption of BMPC is that after the branching time (i.e., the decision postponing time) is reached, the uncertainty (which of the predictions is the correct one) resolves, and the autonomous vehicle (AV) knows which option in the scenario tree it should take. This uncertainty depends on various factors of the traffic scene and cannot be predetermined offline independently of the current situation. Thus, it is necessary to adapt the branching time online based on the observed situation and depending on when it is expected to have sufficient information for a decision.

A wrong selection of the branching time can harm AV performance. If set too short, decisions may be made prematurely, potentially resulting in the selection of the wrong scenario due to the remaining uncertainty. A longer branching time postpones the decision, aiming to accommodate all scenarios, but this can result in overly conservative behavior where an opportunity may be missed, such as merging into a promising gap, or where no feasible solution at all can be left, which could also lead to dangerous behavior.

Existing Branch MPC approaches treat the decision postponing/branching time as a tuning parameter selected offline or using rule-based approaches. Both of these approaches cannot guarantee that the selected branching time is not too long, leading to infeasibility. Missing maneuver opportunities could lead to overconservative behavior (frozen robot problem) or even situations where no feasible solution at all can be left, which could also lead to dangerous behavior.

Accordingly, the limitations of current planning and control methods for autonomous driving comprise several key challenges. Restricting the scenario tree by pruning low-probability scenarios can lead to uncomfortable or dangerous driving if previously unconsidered scenarios suddenly materialize, potentially resulting in unexpected maneuvers or collisions. Additionally, capturing all possible outcomes of uncertainty within the scenario tree is not computationally tractable, as the exponential growth in the number of scenarios rapidly becomes unmanageable, making real-time decision-making infeasible. Finally, BMPC does not scale efficiently with an increasing number of TPs, even when a relatively small subset of scenarios is considered, as the computational cost of optimizing over all potential outcomes quickly becomes prohibitive, undermining the system's ability to handle complex, dynamic traffic environments.

Hence, there is a need to provide a solution to above mentioned limitations and to strike a balance between computational efficiency and comprehensive safety, ensuring that even low-probability scenarios and trajectories that may pose significant risks are appropriately considered in the planning process, and ensuring adaptive decision postponing computation for optimal decision making at the branching time. This need may be satisfied by the subject-matter of the appended independent claims. The appended dependent claims address optional embodiments of the present disclosure.

According to an aspect of the present disclosure, there is provided a method for autonomous navigation using a branch model predictive control, BMPC, the BMPC being configured to generate control commands to an autonomous system over successive control intervals, the method comprising: obtaining, for each control interval, candidate navigation corridors for the autonomous system; obtaining, using backward reachability analysis, respective backward reachable navigation corridors for at least two of the candidate navigation corridors; obtaining, for each control interval, a highest-progress corridor and a lowest-progress corridor from the backward reachable navigation corridors, wherein the highest-progress corridor is associated with the backward reachable navigation corridor where the autonomous system makes most longitudinal progress, and the lowest-progress corridor is associated with the backward reachable navigation corridor where the autonomous system makes least longitudinal progress; and identifying, for each control interval, an intersection corridor between the highest-progress corridor and the lowest-progress corridor, wherein the intersection corridor is used by the BMPC to dynamically adjust its control commands, ensuring the autonomous system operates within safe and efficient bounds during each control interval.

By obtaining candidate navigation corridors and refining them through backward reachability analysis, the method ensures that the autonomous system follows the most accurate and reliable paths. Furthermore, identifying the highest-progress and lowest-progress corridors allows the BMPC to balance progress and safety effectively, leading to more informed and optimal control decisions. Also, the use of backward reachable navigation corridors helps anticipate and avoid potential obstacles, enhancing the overall safety of the autonomous system. By dynamically adjusting control commands based on the intersection corridor, the BMPC ensures that the autonomous system operates within safe and efficient bounds during each control interval. The method's ability to handle multiple candidate trajectories and refine them through reachability analysis makes it robust to environmental uncertainties and variations. The intersection corridor allows the BMPC to adapt its control strategy in real-time, ensuring that the autonomous system can respond effectively to changing conditions and maintain optimal performance.

These effects collectively contribute to a more reliable, efficient, and safe operation of the autonomous system, enhancing its overall performance in complex and dynamic environments.

In embodiments, the method may further comprise: obtaining, for the highest-progress corridor, a first earliest control interval where the autonomous system must increase its velocity to stay within a lower bound of the highest-progress corridor at a first successive control interval; and obtaining, for the lowest-progress corridor, a second earliest control interval where the autonomous system must decrease its velocity to stay within an upper bound of the lowest-progress corridor at a second successive control interval.

By determining the earliest control intervals where velocity changes are necessary, the system can proactively adjust the autonomous system's speed to ensure it stays within the optimal bounds of the navigation corridors. This helps in maintaining smooth and efficient progress. These steps enable the BMPC to predict and plan for necessary speed adjustments well in advance, improving the overall predictive control capabilities of the system. This foresight allows for more precise and reliable navigation. Also, ensuring that the system increases or decreases its velocity at the appropriate times helps maintain stability and safety, especially during complex maneuvers such as overtaking or navigating through congested areas. By fine-tuning the autonomous system's speed based on the earliest control intervals, the method can optimize performance, balancing the need for speed with the constraints of safety. This leads to more efficient and effective operation. This also allows the BMPC to dynamically adapt to changing conditions in real-time, ensuring that the system can respond to new information and adjust its speed accordingly to stay within safe and efficient operational bounds.

In embodiments, the method may further comprise: for the highest-progress corridor, obtaining, for each control interval preceding the first earliest control interval, a minimum velocity needed to ensure the autonomous system can reach the lower bound of the highest-progress corridor at the first earliest control interval; and for the lowest-progress corridor, obtaining, for each control interval preceding the first earliest control interval, a maximum velocity needed to ensure the autonomous system stays within an upper bound of the lowest-progress corridor at the second earliest control interval.

By calculating the minimum velocity needed for the highest-progress corridor, the method ensures that the autonomous system can reach the lower bound of this corridor on time, maintaining the feasibility of the planned trajectory. Determining the maximum velocity for the lowest-progress corridor ensures that the vehicle does not exceed the upper bound, maintaining safety and preventing overshooting. This allows the BMPC to fine-tune the vehicle's speed dynamically, optimizing the balance between progress and safety. This leads to smoother and more efficient navigation. By planning speed adjustments in advance, the system enhances its predictive accuracy, ensuring that the vehicle can meet its targets within the defined constraints. The ability to adjust speeds based on real-time data and predicted needs allows the BMPC to adapt dynamically to changing conditions, improving overall responsiveness. Overall, these steps improve the BMPC's ability to manage speed and control dynamically, ensuring safe, efficient, and reliable operation of the autonomous system.

By checking if there is a feasible position-velocity combination that satisfies constraints for both the highest-progress and lowest-progress corridors, the system ensures that the vehicle can operate within safe and efficient bounds. This step verifies that the planned trajectory is achievable given the current conditions. Identifying the third earliest control interval where no feasible position-velocity combination exists provides a clear threshold for decision-making. This interval indicates the latest point at which the system must make a decision to either adjust its control strategy or take corrective actions, ensuring timely and informed decisions. Knowing the decision postponing time allows the BMPC to optimize its control strategy by delaying decisions until the last safe moment, gathering more information and better assessing the situation. This leads to more effective and efficient control actions. By ensuring that decisions are made before the vehicle can no longer stay within both the highest and lowest-progress corridors, the system maintains a high level of safety, preventing potential risks and collisions. Overall, these steps enhance the predictive control capabilities of the BMPC by allowing it to anticipate and plan for necessary adjustments well in advance, improving overall navigation accuracy and reliability.

In embodiments, the lower bound of the highest-progress corridor may be determined based on the autonomous system's current position, velocity, and/or maximum acceleration, and the upper bound of the lowest-progress corridor is determined based on the autonomous system's current position, velocity, and/or maximum deceleration.

Determining the lower bound of the highest-progress corridor based on the autonomous system's current position, velocity, and maximum acceleration, and the upper bound of the lowest-progress corridor based on the current position, velocity, and maximum deceleration, ensures that the vehicle's speed adjustments are precisely calculated. This leads to optimized performance, maintaining the balance between progress and safety, and enhancing the system's ability to dynamically adapt to changing conditions.

In embodiments, checking if there is a feasible position-velocity combination that satisfies the constraints for both the highest-progress corridor and the lowest-progress corridor may comprise: using, at a current control interval, a current position and velocity of the autonomous system to predict the autonomous system's position at a successive control interval, e.g. using a kinematic equation or a machine learning model; checking if a first constraint is satisfied for the highest-progress corridor by checking if said predicted position meets or exceeds the lower bound of the highest-progress corridor at the successive control interval; checking if a second constraint is satisfied for the lowest-progress corridor by checking if said predicted position does not exceed the upper bound of the lowest-progress corridor at the successive control interval; if both the first and second constraints are satisfied, identifying that there is a feasible position-velocity combination that satisfies the constraints for both the highest-progress corridor and the lowest-progress corridor; and if only one of the first and second constraints is satisfied, identifying that there is no position-velocity combination that satisfies the constraints for both the highest-progress corridor and the lowest-progress corridor.

By using the current position and velocity of the autonomous system to predict its future position, the method improves the accuracy of the system's predictions for successive control intervals. The method ensures that the autonomous system operates within the defined bounds of both the highest-progress and lowest-progress corridors. This dual constraint satisfaction helps maintain safe and efficient navigation. The ability to dynamically check and adjust the position-velocity combinations ensures that the autonomous system can adapt to changing conditions in real-time, enhancing its robustness and reliability. By identifying whether there is a feasible position-velocity combination that satisfies both constraints, the method helps in making informed decisions about the system's control commands, ensuring optimal performance. The method contributes to the overall safety and efficiency of the autonomous system by ensuring it stays within safe operational bounds while making the most progress possible. These technical effects collectively enhance the performance, safety, and reliability of the autonomous system using branch model predictive control.

In embodiments, the method may further comprise: for the third earliest control interval: determining a lane change time based on a lateral distance and a maximum lateral acceleration; checking if lateral corridors overlap, comprising: checking if the autonomous system's predicted lateral position during a lane change falls within lateral corridor bounds, wherein the lateral corridor bounds comprise a minimum lateral distance and a maximum lateral distance of the autonomous system, wherein the minimum lateral distance is a closest position to a lane boundary that the autonomous system can safely occupy in a current lane, and the maximum lateral distance is a farthest position from a lane boundary that the vehicle can safely occupy in a target lane; if the lateral corridors do not overlap, adjusting the lane change time by moving to a preceding control interval; rechecking if the lateral corridors overlap, and if they don't overlap, readjusting the lane change time by moving to a preceding control interval until overlap is achieved; and identifying the preceding control interval where overlap is achieved as the maximum decision postponing time.

By determining the lane change time based on lateral distance and maximum lateral acceleration of the autonomous system, the method ensures that lane changes are planned with precision, considering the vehicle's dynamic capabilities. Checking if the autonomous system's predicted lateral position during a lane change falls within lateral corridor bounds ensures that the vehicle remains within safe lateral limits. This reduces the risk of collisions or unsafe maneuvers. If the lateral corridors do not overlap, the method adjusts the lane change time by moving to a preceding control interval. This dynamic adjustment ensures that the lane change is feasible and safe, even if initial conditions are not met. By identifying the control interval where lateral corridor overlap is achieved as the maximum decision postponing time, the method allows the autonomous system to delay lane change decisions as long as possible without compromising safety. This provides more flexibility in decision-making. The method ensures that lane changes are executed at the optimal time, balancing the need for progress with safety constraints. This leads to more efficient and effective navigation. Finally, the iterative process of adjusting and rechecking lane change timing enhances the robustness of the system, ensuring that it can adapt to varying conditions and still perform safe lane changes. These technical effects collectively contribute to a more reliable, safe, and efficient autonomous navigation system.

In embodiments, obtaining, for each control interval of the control time horizon, candidate navigation corridors for the autonomous system, may comprise: using a multimodal transformer to generate candidate trajectories for the autonomous system; and using a forward reachability analysis of the candidate trajectories to generate candidate navigation corridors for the candidate trajectories.

Multimodal transformers can process diverse data inputs (e.g., sensor data, maps, traffic information) to generate more accurate and context-aware candidate trajectories for the autonomous system. By leveraging the advanced capabilities of multimodal transformers, the system can better predict potential future states and paths, leading to more reliable navigation decisions. Forward reachability analysis of the candidate trajectories ensures that the generated navigation corridors are feasible and safe, considering the system's dynamic constraints and environmental factors. The use of multimodal transformers allows the system to adapt to various scenarios and conditions, enhancing its ability to navigate complex environments. Combining multimodal transformers with forward reachability analysis can optimize the performance of the autonomous system by ensuring that it operates within the best possible navigation corridors, balancing safety and efficiency. These technical effects contribute to a more robust, adaptive, and efficient autonomous navigation system.

In embodiments, obtaining, using backward reachability analysis, respective backward reachable navigation corridors for at least two of the candidate navigation corridors comprises using zonotope-based simplified backward reachability analysis.

Zonotope-based methods are computationally efficient, allowing for faster calculations of reachable sets. This efficiency is crucial for real-time applications in autonomous systems. The simplified approach can handle high-dimensional systems more effectively, making it suitable for complex autonomous systems with multiple degrees of freedom. Zonotopes provide a tight approximation of reachable sets, ensuring that the backward reachable navigation corridors are accurately defined. This precision helps in maintaining safe and reliable navigation. Zonotope-based analysis can effectively manage uncertainties in the system's dynamics and environment, enhancing the robustness of the autonomous system's navigation. The use of simplified backward reachability analysis reduces the complexity of the implementation, making it easier to integrate into existing control frameworks. By accurately defining the backward reachable navigation corridors, the method ensures that the autonomous system operates within safe bounds, reducing the risk of collisions or unsafe maneuvers.

In embodiments, using, by the BMPC, the intersection between the highest-progress corridor and the lowest-progress corridor comprises translating the intersection corridor into convex constraints for the BMPC.

Convex constraints are easier to handle in optimization problems. This simplification allows the BMPC to solve the control problem more efficiently and reliably. Convex optimization problems can be solved more quickly and with less computational effort compared to non-convex problems. This efficiency is crucial for real-time control applications. Convex constraints ensure that the feasible region for the control problem is well-defined and convex, which guarantees that any solution found will be feasible and optimal within the defined bounds.

Using convex constraints helps maintain the stability of the BMPC by ensuring that the control commands do not lead to unstable or unsafe behavior. Convex constraints can be designed to account for uncertainties and disturbances, enhancing the robustness of the autonomous system's performance. The use of convex constraints ensures that the control commands generated by the BMPC are consistent and predictable, leading to smoother and more reliable operation of the autonomous system.

According to another aspect of the present invention, there is provided a computer program comprising instructions which, when the computer program is executed by a computer, cause the computer to carry out any one of the methods discussed above.

According to a further aspect of the invention, there is provided a computer-readable data carrier having stored thereon the computer program mentioned above.

According to a further aspect of the invention, there is provided an apparatus comprising: one or more interfaces for communication; a memory; and a data processing circuit configured to carry out any one of the methods discussed above.

Examples will now be further described with reference to the figures in which:

Fig. 1 shows a flow diagram illustrating a computer-implemented method 100 for generating relevant corridors for a BMPC used in autonomous navigation.

Fig. 2 shows a schematic illustrating the steps of generating the relevant corridors according to method 100.

Fig. 3 schematically illustrates a block diagram of an embodiment of a method for autonomous navigation.

Fig. 4 shows a flow diagram illustrating a computer-implemented method 400 for autonomous navigation using a BMPC.

Fig. 5 shows a schematic illustrating the steps of determining an intersection corridor according to method 400.

Fig. 6 schematically illustrates a block diagram of an embodiment of an apparatus to execute the methods described herein.

Detailed Description

Autonomous vehicles must navigate complex and dynamic environments by predicting the future behavior of surrounding traffic participants (e.g., pedestrians, cyclists, and other vehicles). Traditional trajectory prediction methods often generate a single-mode, deterministic prediction, but real-world traffic behavior is inherently multimodal, with multiple potential future trajectories for each participant. To address this, a learning-based multimodal predictor, such as the Motion Transformer, can be employed to generate multiple possible future trajectories (or modes) for each traffic participant. These predictions are then integrated into a Branch Model Predictive Contouring Control (MPCC) framework, which plans the vehicle's trajectory by considering the different potential behaviors of surrounding traffic participants.

However, the use of multimodal predictions introduces a significant computational challenge. As the number of traffic participants and prediction modes increases, the corresponding scenario tree used by the Branch MPCC grows exponentially, which drastically increases computation time and makes real-time planning difficult. To address this issue, it is necessary to develop a strategy to efficiently select the most important predictions, ensuring that the scenario tree remains manageable while still accounting for a broad range of possible outcomes.

The present invention provides an innovative solution to address the computational challenges of incorporating multimodal predictions into Branch MPCC for autonomous driving. The method employs a learning-based multimodal predictor, such as the Motion Transformer, to generate multiple candidate future trajectories for each traffic participant. These predictions are then processed by a reachability analyzer that generates corresponding corridors for each candidate trajectory. The corridors are consequently used by the Branch MPCC to plan the vehicle's trajectory in a manner that accounts for the different potential behaviors of surrounding traffic participants. A key feature of this approach is that the Branch MPCC allows for decision postponing by constraining different prediction-based strategies to remain identical for the first few timesteps or control intervals, allowing the system to gather more information before committing to a particular strategy.

In addition, to mitigate the exponential growth of the scenario tree, the disclosure introduces an approach that extracts driving corridors for the autonomous vehicle based on reachability analysis for each candidate trajectory of the predictor. A driving corridor represents a feasible region within which the vehicle can safely navigate, given the predicted behaviors of the surrounding traffic participants. The invention further refines the scenario tree by merging driving corridors with significant overlap, treating them as a single scenario, while scenarios with minimal overlap are kept separate. This selective merging of corridors reduces the number of distinct scenarios to consider, while still capturing a wide range of possible outcomes and ensuring safety.

Also, the present disclosure addresses the challenge of determining the optimal decision postponing time for lane changes in autonomous systems using branch Model MPCC. By generating candidate navigation corridors and performing both forward and backward reachability analyses, the disclosed method ensures that corridors that are both forward and backward reachable are considered, thereby improving the safety of navigation. The identifies the highest and lowest progress corridors. It then iteratively checks for feasible position-velocity combinations within these corridors, adjusting the lane change time and control intervals as needed. This ensures that the autonomous system can safely and efficiently perform lane changes within the control time horizon, while adhering to both longitudinal and lateral constraints.

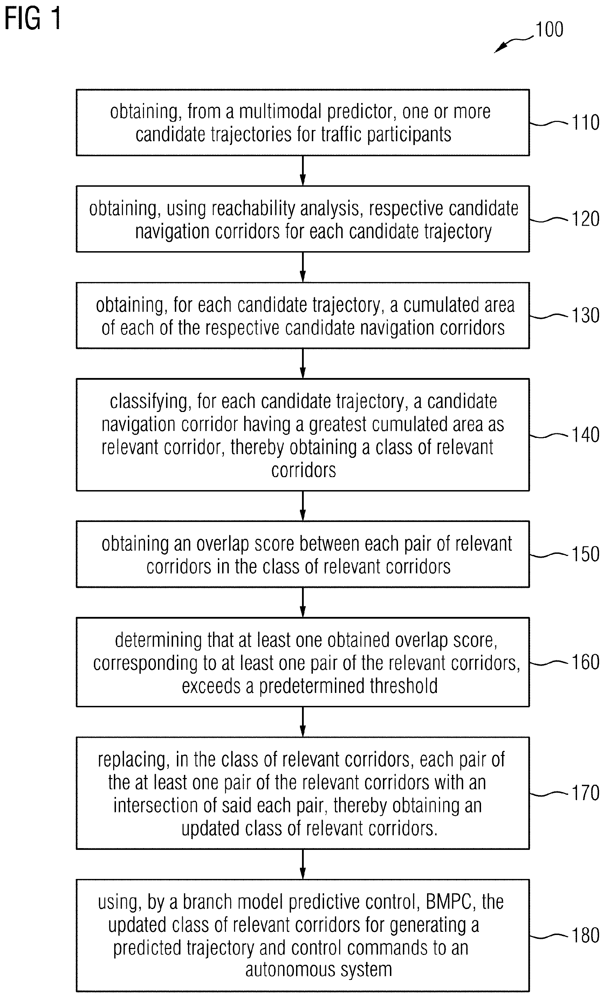

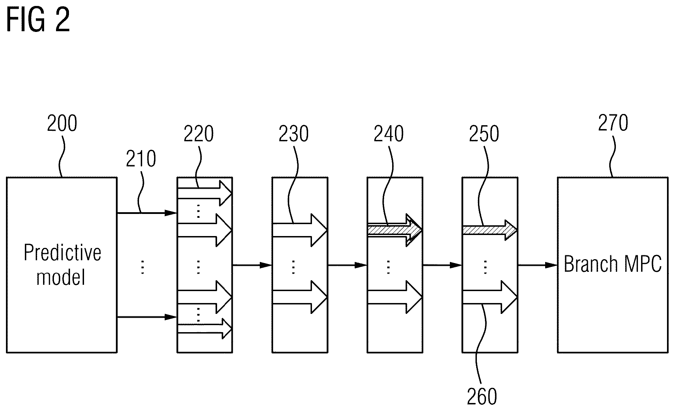

Fig. 1 shows a flow diagram illustrating a computer-implemented method 100 for generating relevant corridors 250, 260 for a BMPC 270 used in autonomous navigation, and Fig. 2 shows a schematic illustrating the steps of generating the relevant corridors 250, 260 according to method 100.

Step 110 of method 100 comprises obtaining, from a multimodal predictor 210, one or more candidate trajectories for traffic participants.

The multimodal predictor may be a predictive model. The multimodal predictor may be at least one of a multimodal transformer, a Recurrent Neural Network (RNN), such as LSTMs and GRUs, a Convolutional Neural Network (CNN), a Graph Neural Networks (GNNs), a Generative Adversarial Networks (GANs), and a Bayesian Network. Hybrid models combining these predictors can leverage their strengths to enhance prediction accuracy and robustness, making them suitable for complex autonomous navigation scenarios.

The traffic participants may be at least one of vehicles (e.g. cars, trucks, buses, motorcycles), pedestrians, cyclists, and various non-motorized users like skateboarders and scooter riders. Additionally, traffic participants may include emergency vehicles, public transportation vehicles, drones, and construction vehicles. Animals, such as pets or wildlife, can also be considered traffic participants. Each of these participants has unique movement patterns and behaviors that the autonomous system must account for to ensure safe and efficient navigation. The candidate trajectory 210 represents the predicted path of a moving object (such as the ego-vehicle or another surrounding agent) over time.

The candidate trajectory 210 may be predicted, by the multimodal predictor 200, based on the vehicle's current state (position, velocity, acceleration) and possible future behaviors (such as lane changes, stops, or turns), often considering multiple possible future scenarios or modes.

The candidate trajectory 210 may consist of a sequence of locations or waypoints (e.g., positions in the x, y, and possibly z dimensions) over time, and it describes the evolution of the vehicle's state (including lateral and longitudinal position, velocity, acceleration, etc.) over the forecasted time horizon.

The candidate trajectory 210 might also capture uncertainty in the vehicle's future motion, especially when generated by a multi-modal transformer, which predicts different potential future outcomes based on the current state of the agent and interactions with other agents in the environment.

Step 120 comprises obtaining, using reachability analysis, respective candidate navigation corridors 220 for each candidate trajectory 210.

In embodiments, the step of obtaining, using reachability analysis, respective candidate navigation corridors may be parallelized since every candidate navigation corridor of the respective candidate trajectory can be calculated independently of the other candidate trajectories.

In embodiments, obtaining, using said reachability analysis, said candidate corridors (also called reachable sets) or candidate navigation corridors 220 (also called reachable sets) per candidate trajectory 210 may comprise defining the autonomous system's dynamics and any uncertainties in its motion, such as variations in speed and direction, and, starting from the initial state of said system, solving the differential equations governing the vehicle's behavior over time (over each control interval), considering these uncertainties. This process generates a set of all possible future states the vehicle can reach within a given time horizon, forming the reachable set. By repeating this for each point along the candidate trajectory 210, one can construct a corridor that encompasses all potential positions the autonomous system might occupy, ensuring safe navigation by accounting for dynamic constraints and uncertainties.

The reachability analysis may be performed using the Hamilton-Jacobi (HJ) reachability analysis method. This method involves solving the Hamilton-Jacobi partial differential equation to compute the reachable set for the autonomous system. It is particularly effective for systems with nonlinear dynamics and can handle various types of uncertainties, making it suitable for predicting the safe navigation corridors of autonomous vehicles.

The reachability analysis may be performed using Mixed-Integer Linear Programming (MILP). MILP can be used to compute reachable sets by formulating the problem as a set of linear constraints and integer variables. This method is particularly useful for systems with linear dynamics and can handle complex constraints, making it suitable for generating navigation corridors in autonomous driving scenarios. It is noted that HJ and MILP may not be viable solutions for real-time motion planning, especially in dynamically changing driving environments. In this disclosure the linear model zonotope-based approximation is used.

The driving or navigation corridor, often referred to as the forward reachable set (FRS) in control theory, represents the region of space within which the ego-vehicle (or any agent) can safely travel over time, considering its dynamics, control constraints, and uncertainties (such as road curvature, vehicle steering limits, or external disturbances).

The driving corridor may account not only for the predicted future trajectory but it may also account for the uncertainty in the vehicle's motion. It accounts for all possible reachable states within a control horizon.

The driving corridor may be wider than a single predicted trajectory, as it encompasses all the potential states (positions) the vehicle could occupy while following any of the predicted trajectories. It is a safe zone that ensures the vehicle stays within bounds, avoiding collisions with other agents or obstacles.

As explained later in this disclosure (refer to step: approximating, at each control interval, said reachable set using zonotopes), the (candidate) driving or navigation corridor can be represented as a convex set, such as a zonotope, which accounts for all possible reachable states within a control interval, or it can be represented as a series of polygonal or elliptical regions that expand over time. It might include a lateral margin (representing how much the vehicle can drift side-to-side) and a longitudinal margin (for how far ahead the vehicle can travel).

Step 130 of method 100 comprises obtaining, for each candidate trajectory 210, a cumulated area of each of the respective candidate navigation corridors 220,

In embodiments, the cumulated area of a candidate navigation corridor 220 (candidate navigation corridor, or navigation corridor, or corridor - also called reachable set or forward reachable set) may be the total space that can be reached by the autonomous system e.g. from an initial state, over time (e.g. over several control intervals, or over a control time horizon), considering the system's dynamics and uncertainties. Said area may be computed for each control interval based on the progress.

By calculating the cumulated area, one can compare different candidate navigation corridors 220 (reachable sets) and select the one that offers the most flexibility and potential for reaching desired states. This is particularly useful in applications like autonomous driving, where understanding the range of possible future states is crucial for safe and effective decision-making.

Step 140 comprises classifying, for each candidate trajectory 210, a candidate navigation corridor 220 having a greatest cumulated area as relevant corridor, thereby obtaining a class of relevant corridors 230.

In embodiments, the obtained class of relevant corridors may be a class for all candidate trajectories. Accordingly, the candidate navigation corridors may be classified by evaluating the cumulated area of each corridor. The corridor with the greatest cumulated area may be considered the (e.g. most) relevant corridor. This approach ensures that the selected corridor provides the most space for safe navigation, accommodating uncertainties and dynamic constraints. By focusing on the corridor with the largest area, the system prioritizes paths that offer the highest likelihood of maintaining safety and avoiding obstacles, thus enhancing the overall robustness of the autonomous vehicle's trajectory planning.

Step 150 of method 100 comprises obtaining an overlap score between each pair of the relevant corridors 230 in the class of relevant corridors 230.

In embodiments, obtaining an overlap score between every relevant corridor pair may comprise using the Intersection over Union (IoU) method. This involves calculating the area of overlap (intersection) between two corridors and the total area covered by both corridors combined (union). The IoU score is then computed as the ratio of the intersection area to the union area. This score ranges from 0 to 1, where 0 indicates no overlap and 1 indicates complete overlap. By calculating the IoU for each pair of the relevant corridors 230, one can quantify their overlap, helping to assess the similarity and potential conflicts between different navigation paths. Embodiments of obtaining said overlap score are also presented below.

Step 160 of method 100 comprises determining that at least one obtained overlap score, corresponding to at least one pair of the relevant corridors, exceeds a predetermined threshold.

In embodiments, the predetermined threshold for the overlap score may involve balancing safety and flexibility in the navigation system. Said threshold may be determined based on empirical data and safety requirements. It can be derived from historical data on traffic patterns and collision statistics, ensuring that the threshold minimizes the risk of collisions while allowing for smooth navigation. Additionally, said threshold can be adjusted based on the specific operational environment, such as urban or highway settings, and the desired level of conservatism in the vehicle's behavior. By analyzing these factors, one can set a threshold that ensures at least one pair of the relevant corridors 230 has sufficient overlap to be considered safe and reliable for navigation.

Step 170 of method 100 comprises replacing, in the class of relevant corridors, each pair of the at least one pair of the relevant corridors 230 with an intersection 240, 250 of said each pair, thereby obtaining an updated class of relevant corridors.

In embodiments said intersection 240, 250 may be an intersection corridor. Said intersection may be classified or labeled as relevant corridor in the class of relevant corridors. Accordingly, each pair of corridors that have a, e.g. large, overlap exceeding the predefined threshold is replaced with the intersection (that may be an intersection corridor 240, 250) of said pair. This intersection (i.e. intersection corridor) represents the combined safe navigation space for that pair. By doing this, one ensures that the relevant navigation corridors are further refined to include only the areas that are mutually safe and feasible, enhancing the overall reliability and safety of the autonomous vehicle's trajectory planning.

Step 180 of method 100 comprises using, by a branch model predictive control, BMPC 270, the updated class of relevant corridors for generating a predicted trajectory and control commands to an autonomous system.

In embodiments, the BMPC optimization problem can then be formulated to minimize a cost function subject to the corridors of the updated class of relevant corridors and/or subject to inequality constraints derived from said corridors, e.g. convex constraints, and used in the cost function of the optimization problem of the BMPC 270, e.g. as explained below. The cost function might include terms for tracking the reference path, minimizing control effort, and ensuring smoothness.

In embodiments, the autonomous system can be at least one of vehicles, robots, drones, ships, and objects. Examples include aircraft, submarines, satellites, industrial machinery, home appliances, medical devices, and agricultural equipment. These systems utilize advanced technologies like artificial intelligence, machine learning, and sensors to perform tasks independently, enhancing efficiency, safety, and convenience across different sectors.

By using said constraints, the BMPC 270 can guarantee that the generated trajectories are feasible and respect the physical limitations of the vehicle and environment. The inequality constraints simplify the optimization problem, making it more computationally efficient to solve, which is crucial for real-time applications. Additionally, by integrating these constraints into the BMPC optimization problem, BMPC 270 can effectively balance safety, performance, and computational efficiency, leading to more reliable and robust autonomous vehicle control.

In embodiments, the BMPC 270 is used in the autonomous systems to optimize trajectory planning and control commands for the autonomous systems enabling autonomous navigation. It involves generating multiple candidate trajectories (branches) and evaluating them against predefined safety and feasibility criteria, such as relevant navigation corridors. BMPC uses these evaluations to select the most optimal trajectory that ensures safe and efficient navigation. By considering the corridors of the updated class of relevant corridors, the BMPC is able to dynamically adjust its control commands, thereby enhancing the autonomous system's ability to handle uncertainties and adapt to changing environments, leading to more robust and reliable autonomous operation.

Using by the BMPC the corridors of the updated class of relevant corridors to generate a predicted trajectory and control commands allows the autonomous system to make more informed and precise decisions by considering multiple safe and feasible paths. BMPC leverages these corridors to optimize the vehicle's trajectory, ensuring it stays within the safest bounds while adapting to dynamic changes in the environment. This approach enhances the system's ability to handle uncertainties and obstacles, leading to smoother, safer, and more efficient navigation.

In embodiments, the predicted trajectory may be a planned path that the autonomous system aims to follow, generated by considering said multiple potential future corridors (i.e. the corridors in the class of relevant corridors (also called scenarios)). The predicted trajectory may be a primary trajectory for the autonomous system and the corresponding control commands (e.g.

steering, acceleration, braking) may be used to guide said system on said primary trajectory. This approach enhances the system's ability to handle uncertainties and dynamic environments, ensuring safer and more reliable operation.

In embodiments, the corridors in the updated class of relevant corridors can be translated into constraints for the BMPC optimization problem e.g. by defining the spatial boundaries within which the vehicle must operate, e.g. as further explained below. These corridors may provide the permissible regions for the vehicle's trajectory, ensuring it stays within safe and feasible paths. In the optimization problem, these boundaries are represented as linear inequality constraints that restrict the autonomous system's position and movement. By incorporating these constraints, BMPC can optimize the trajectory and control commands to ensure the vehicle navigates safely within the defined corridors, accounting for dynamic changes and uncertainties in the environment.

In embodiments, said BMPC optimization problem may be formulated as in Bouzidi et. Al. "Motion Planning under Uncertainty: Integrating Learning-Based Multi-Modal Predictors into Branch Model Predictive Control", see for instance Equation 6, where the state constraints correspond to the inequality constraints.

In embodiments, the reachability analysis may comprise: for each candidate trajectory 210: obtaining, at each control interval, a reachable set using reachability analysis, wherein the reachable set represents a set of possible states of the autonomous system, said states including at least one of positions, velocities, and orientations, wherein the control interval represents a time between successive control commands of the BMPC; approximating, at each control interval, said reachable set using zonotopes, thereby obtaining a zonotope approximation of said reachable set, wherein the zonotopes provide a simplified representation of the reachable set; and applying, at each control interval, a Minkowski sum to the zonotope approximation, thereby obtaining a forward reachable set representing a candidate navigation corridor of a traffic participant, wherein the forward reachable set may represent a set of possible states the autonomous system can reach over several control intervals, e.g. considering uncertainties and disturbances. The several control intervals may be consecutive control intervals during a control horizon.

The candidate navigation corridor (also called forward reachable set) refers to the set of all possible states (e.g., position, velocity, orientation) that the vehicle can reach over time (e.g. over an entire control time horizon comprising e.g. several consecutive control time intervals) based on its current state and/or the set of possible control inputs (steering, acceleration, braking) at each timestep. It's a spatial region that encompasses the vehicle's potential future locations and motions along a specific candidate trajectory 210 predicted by the multimodal predictor 200 for a specific traffic participant.

In embodiments, the Minkowski sum combines the current reachable set with the set of possible control inputs (such as steering, acceleration, or braking), to compute the new reachable set at the next control interval representing the set of all possible future states of the traffic participant.

In embodiments, the Minkowski sum may be applied at each control step. This means that for each control interval, the method computes the reachable set (approximated by a zonotope) and then applies the Minkowski sum to combine it with the reachable set from the previous interval. This sequential approach accumulates the reachable sets step-by-step.

In embodiments, the zonotope-approximated reachable sets for each control interval may be computed first, and then the Minkowski sum may be applied to combine all these sets at the end. This approach generates a cumulative forward reachable set that represents all possible states over the entire time horizon.

Both sequential and cumulative Minkowski methods mentioned above aim to capture the full range of possible states the system can reach, wherein the sequential application provides a more granular view of the reachable sets at each step, while the cumulative application gives a comprehensive view at the end.

In summary, the Minkowski sum can be applied either sequentially at each control step or cumulatively after computing the zonotope approximations for all intervals. The choice depends on the specific requirements and constraints of your reachability analysis framework.

In embodiments, obtaining an overlap score between each pair of the relevant corridors 230 in the class of relevant corridors may comprise: for each pair of the relevant corridors 230: obtaining, at each control interval, an intersection over union, IoU, value between respective two zonotope approximations of the pair of relevant corridors, wherein the control interval may represent a time between successive control commands of the BMPC. Said obtaining of the overlap score between each pair of the relevant corridors 230 may further comprise multiplying the IoU values obtained at all control intervals across a control time horizon, thereby obtaining a multiplication value that may represent the overlap score of the pair of relevant corridors, wherein the control time horizon may represent a total duration over which the predicted trajectory of the BMPC may be planned.

In embodiments, the predetermined threshold is an IoU threshold. For instance, the condition IoU threshold = 0 ensures that the planner considers all predicted modes and guarantees safety by accounting for every potential future scenario, but it leads to very conservative behavior. Lower IoU thresholds (e.g., closer to 0) make the vehicle even more conservative by considering more distinct, potentially unlikely scenarios. Higher IoU thresholds (e.g., closer to 1) reduce the number of scenarios considered and allow the vehicle to make less cautious decisions, possibly missing out on rare, but important, possibilities.

In embodiments, using, by the branch model predictive control, the updated class of relevant corridors for controlling an autonomous system may comprise translating the corridors in the updated class of relevant corridors into convex constraints for the BMPC.

For example, translating the corridors of the updated class of relevant corridors into said convex constraints for the BMPC may involves defining the safe navigation areas as convex sets. For example, if the relevant corridor is a polygonal region defined by vertices ((x1, y1), (x2, y_2), ..., (xn, yn)), one can represent this region as a set of linear inequalities that form a convex polygon. These convex constraints ensure that the optimization problem in BMPC remains tractable and can be efficiently solved, allowing the autonomous system to navigate within the safe and feasible regions defined by these corridors.

In embodiments, translating the corridors of the updated class of relevant corridors into convex constraints for the BMPC may comprise: expressing a lateral boundary and a longitudinal boundary of each corridor, of the updated class of relevant corridors, in Frenet coordinates, for (e.g. thereby) obtaining simplified lateral and longitudinal boundaries; converting the simplified longitudinal boundary into a first inequality constraint for longitudinal progress (e.g. $Smin \leq s(t) \leq Smax$); converting the simplified lateral boundary into a second inequality constraint for lateral deviation (e.g. $-Dmax \leq d(t) \leq Dmax$); and including the first and second inequality constraints in a BMPC optimization problem, i.e. optimize, by the MPCC, the trajectory, while minimizing a cost function subject to said constraints.

For instance, each forward reachable set, or driving corridor, can be defined by its lateral and longitudinal boundaries, which can be represented in Frenet coordinates: The lateral boundary represents the side limits of the driving corridor, defining how far the vehicle can move left or right. In Frenet coordinates, this is typically the (d)-coordinate, which measures the lateral distance from the reference path (The reference path is a predefined trajectory that serves as a baseline for the vehicle's movement, guiding its position and orientation in the environment). The longitudinal boundary represents the front and rear limits of the driving corridor, defining how far the vehicle can move forward or backward. In Frenet coordinates, this is the (s)-coordinate, which measures the distance along the reference path.

By using Frenet coordinates, the boundaries of the driving corridor can be efficiently described relative to a reference path, simplifying the representation and computation of the vehicle's possible states within the corridor.

In embodiments, expressing a lateral boundary and a longitudinal boundary of each corridor in Frenet coordinates comprises assuming that all lanes along each corridor, of the updated class of relevant corridors, may be parallel.

By expressing the lateral and longitudinal boundaries of each corridor in Frenet coordinates, while assuming that all lanes are parallel, simplifies the mathematical representation of the vehicle's path. This assumption allows the boundaries to be described as straight lines in the Frenet frame, making the constraints easier to handle in the optimization process. The lateral boundary can be represented as a constant offset from the reference path, while the longitudinal boundary can be expressed as progress along the path. This simplification reduces computational complexity and enhances the efficiency of the BMPC in generating and optimizing the vehicle's trajectory within the defined corridors.

In embodiments, converting the simplified longitudinal boundary into the first inequality constraint for longitudinal progress comprises, for each control interval: obtaining a longitudinal progress that tracks the autonomous system's position along a reference path (e.g. Said progress ensures the vehicle moves forward along the reference path at the desired rate); and defining a minimum and maximum allowable progress, for the longitudinal progress, within the simplified longitudinal boundary, thereby obtaining the inequality constraint for the longitudinal boundary.

In embodiments, converting the simplified lateral boundary into the second inequality constraint comprises: for each control interval: obtaining a normal vector $(n(s1))$ for a reference point (e.g. given by $p(s1) = (x_k(s1), y_k(s1))$ along a predefined reference path of the autonomous system (for instance, the normal vector may be obtained by rotating the tangent vector to the path by 90 degrees); obtaining the lateral deviation (e.g. contouring error $e_c$) as a perpendicular distance from the autonomous system's current position $(x_k(s2), y_k(s2))$ to the reference points e.g. at a certain progress s2 (e.g. $e_c = n(s1) \square (x_k(s2) - p(s1))$); setting bound for the lateral deviation $(e_{c,min} \leq e_c \leq e_{c,max})$ in terms of the normal vectors $(d_{min} \leq n(s1) \llcorner (x_k(s2) - p(s1)) \leq d_{max})$, thereby obtaining the (linear) inequality constraint for the lateral boundary.

In embodiments, converting the simplified longitudinal boundary into the first inequality constraint for longitudinal progress comprises, for each control interval: obtaining a first normal vector (e.g. the normal vector at $s_{min}$, $n(s_{min}) \lrcorner (x - p(s_{min})) \geq 0$) for a reference point associated with a minimum allowable longitudinal progress $(s_{min})$ along a predefined reference path of the autonomous system, wherein the minimum allowable longitudinal progress is within the simplified longitudinal boundary; obtaining a second normal vector (e.g. at $s_{max}$, $n(s_{max}) \square (x - p(s_{max})) \leq 0$). for a reference point associated with a maximum allowable longitudinal progress $(s_{max})$ along the predefined reference path of the autonomous system, wherein the maximum allowable longitudinal progress is within the simplified longitudinal boundary; and computing a minimum progress constraint (e.g. $A_{min}x + B_{min}y + C_{min} \geq 0$) based on the first normal vector, and a maximum progress constraint (e.g. $A_{max}x +$ $B_{max}y + C_{max} \leq 0$) based on the second normal vector, thereby obtaining the inequality constraint for the longitudinal boundary.

By incorporating said inequality constraints, the BMPC can guarantee that the generated trajectories are feasible and respect the physical limitations of the vehicle and environment. The inequality constraints simplify the optimization problem, making it more computationally efficient to solve, which is crucial for real-time applications. Further, by integrating these constraints, BMPC can effectively balance safety, performance, and computational efficiency, leading to more reliable and robust autonomous vehicle control.

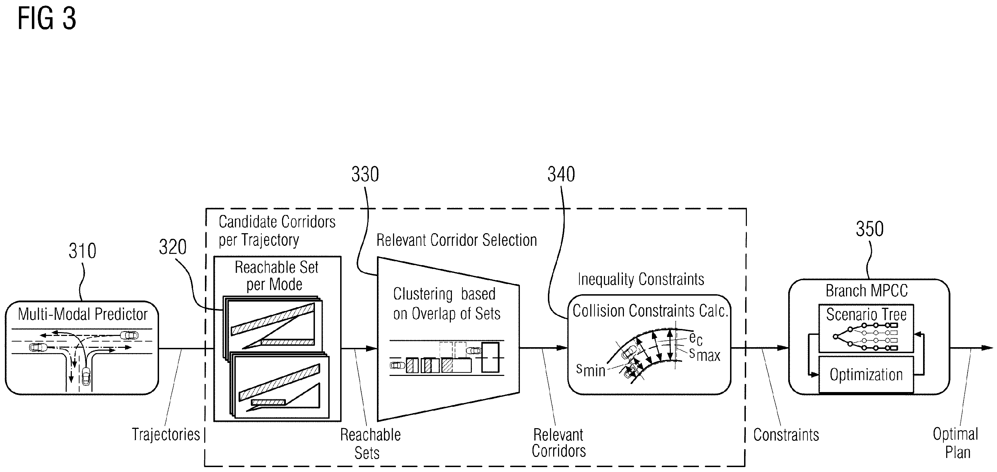

Fig. 3 schematically illustrates a block diagram of an embodiment of a method for autonomous navigation.

The method utilizes a learning-based multimodal predictor 310 (such as a Motion Transformer) to predict multiple possible trajectories of the traffic participants and a Branch Model Predictive Contouring Control (MPCC) 360 to plan against these multiple possible behaviors of the traffic participants for safe and comfortable autonomous driving functions. The Branch MPCC plans with different predictions of the traffic by allowing different strategies which are constrained to be identical in the first couple of timesteps, i.e. for decision postponing until it is clear which strategy to take. The disadvantage of the Branch MPCC is that computation time increases drastically with the number of scenarios (i.e. predictions) considered in its scenario tree. As a solution, multiple driving corridors 320 (also called navigation corridors) are extracted for each trajectory (also called mode) generated by the predictor 310 based on reachability analysis. Driving corridors 320 with significant overlap are merged and treated as a single scenario in the relevant corridor selection unit 330, while those with minimal overlap are treated as separate scenarios in the scenario tree.

As explained above, teachability analysis may be deployed in this disclosure as a tool with which the set of all possible future states a vehicle can reach, given its initial state, dynamics, and constraints, while accounting for static and dynamic obstacles can be calculated. Exact reachability analysis is time-consuming, so we use approximations to improve efficiency. First of all, the reachable set may be approximated for each timestep (also called control interval or time cycle) using zonotopes with which the Minkowski sum is calculated, and thus the forward reachable sets efficiently.

In embodiments, the vehicle behavior may be approximated using a point mass model (bounding velocity and acceleration) in longitudinal direction using Frenet coordinates on the reference path while modeling lateral behavior as discrete events (for lane changes) assuming a minimum lane change time considering current velocity and maximum acceleration. All relevant lanes for the autonomous vehicle may be assumed to be parallel to each other. With said assumption one can correct the approximation error of using Frenet coordinates if the ego vehicle position deviates significantly from the reference path. Furthermore, it may be assumed that in the given planning horizon only one lane change is possible which is reasonable since the average lane change may take 3-5s, which corresponds to the planning horizon. The predicted trajectories (also called obstacle Predictions) may hence be transformed into Frenet coordinates and mapped to the respective lanes.

With this approach all possible driving corridors may be calculated for each trajectory (obstacle prediction) of the multimodal predictor 210, 310. The calculation of the driving corridor for each mode may be parallelized. Each trajectory (also called mode) can generally lead to multiple potential driving corridors for the autonomous vehicle (i.e. different possible maneuvers). Hence, for each mode the most promising one may be selected based on the greatest cumulated area in the relevant corridor selection unit 330, since these generally yield less restrictive position constraints for trajectory optimization.

In embodiments, after extracting the driving corridor for all trajectories, the driving corridors may be compared to each other to find a small number of subsets which satisfy all trajectories. This is done by checking the overlap of all combinations of driving corridors by calculating the Intersection over Union(IoU) of the respective zonotopes. The IoUs for each timestep are multiplied and set an IoU threshold. If two driving corridors exceed this threshold they are clustered as one scenario or relevant corridor. By doing so, one can reduce the driving corridor for the respective scenario to the intersection of the two driving corridors. If the IoU threshold is not met for two driving corridors, e.g. there is no overlap between one of the zonotopes, these two driving corridors correspond to two different clusters.

If the IoU threshold is zero one can already ensure safety, i.e. if we consider these outputted subsets, the planner also is guaranteed to consider all outputted modes of the predictor 210, 310. However, the lower the IoU threshold the more conservative the autonomous vehicle behavior is. On the other hand, higher IoU thresholds could lead to more clusters/ scenarios.

In embodiments, after extracting the driving corridors per scenario, the driving corridors are transformed in Frenet coordinates into inequality constraints 340 for the MPCC. Typically, collision constraints 340 are nonconvex where the ego vehicle is modelled as multiple (often three) intersecting circles and the other vehicles as ellipses to approximate the Minkowski sum. Hence, this does not scale well with the number of obstacles as it requires 3*O*N*S (+ 2*N*S for the road boundaries) constraints in the optimization problem leading to a high computation time of the solver (O: number of obstacles/ traffic participants, N: Planning horizon, S: number of Scenarios).

In embodiments, only convex constraints 340 may be obtained, which is beneficial for the solver. Also, the number of constraints may be constant with respect to the number of traffic participants (4*N*S). For that, we can take advantage of the MPCC formulation to define these constraints. The MPCC may have the arclength/progress on path as an internal state such that for the lateral constraints one can simply bound the contouring error e_c of the MPCC. For the longitudinal constraints, the minimum and maximum progress may be determined for each timestep, and the normal vector of the reference path on the respective progress may be calculated. These normal vectors are then used as linear constraints for x and y position in the optimization problem.

The constraints 340 are normally proportional to three main factors: O: The number of obstacles or traffic participants in the environment, such as other vehicles, pedestrians, or static objects. Each obstacle introduces a set of constraints based on its position, size, and velocity relative to the ego vehicle. N: The planning horizon, which refers to the number of timesteps over which the vehicle plans its trajectory. For each timestep, the vehicle must account for potential collisions at that particular moment in time. S: The number of scenarios or predicted future trajectories generated by the multimodal predictor, reflecting different possible outcomes or behaviors of the surrounding traffic. Each scenario adds additional constraints to ensure that the vehicle avoids collisions in every possible future trajectory. The collision constraints for each obstacle at each timestep and scenario grow as a product of these factors, leading to a total number of constraints expressed as 3xOxNxS (due to the three circle models for the ego vehicle). Additionally, constraints are also required for the road boundaries, such as lane boundaries, adding another 2×N×S constraints. This results in a large number of constraints in the optimization problem, which scales with the number of obstacles (O), timesteps (N), and scenarios (S). As a result, the computational time required to solve this optimization problem increases rapidly, especially in complex traffic environments with many obstacles, long planning horizons, and multiple predicted scenarios, making real-time decision-making challenging for the vehicle's controller.

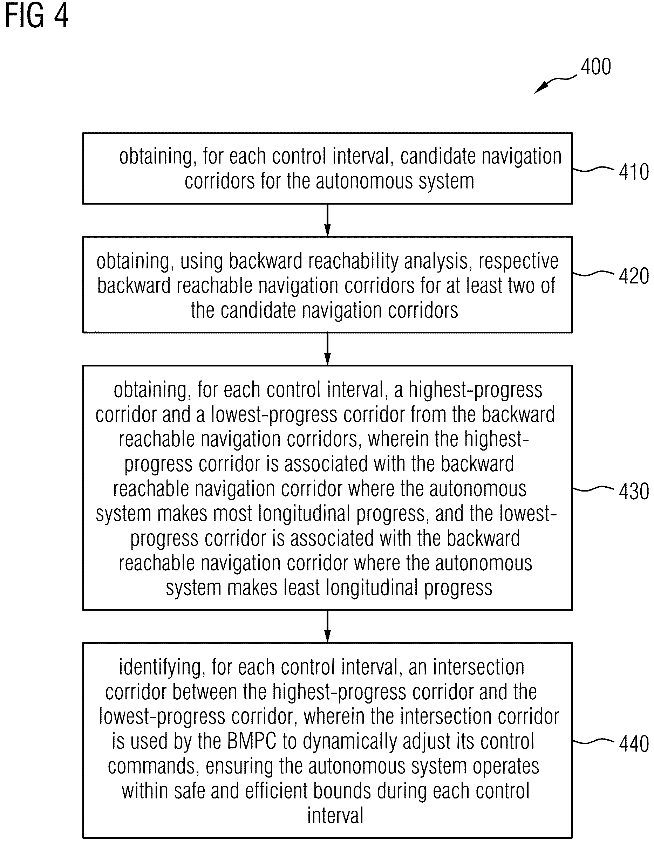

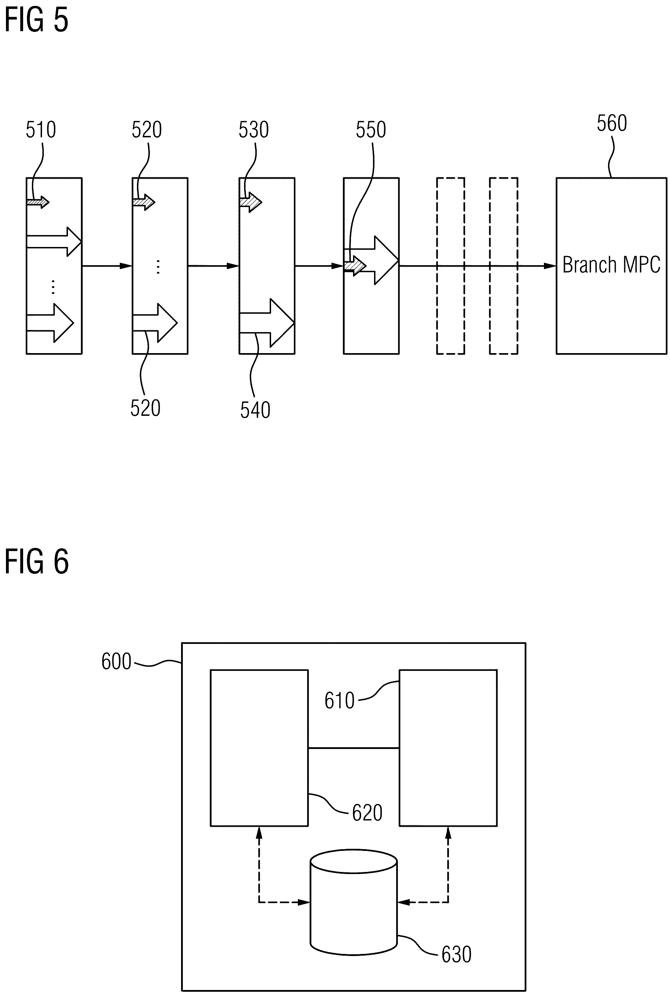

Fig. 4 shows a flow diagram illustrating a computer-implemented method 400 for autonomous navigation using a BMPC, and Fig. 5 shows a schematic illustrating the steps of determining an intersection corridor according to method 400. The BMPC is configured to generate control commands to an autonomous system over successive control intervals, e.g. of a control time horizon.

The control commands of the BMPC for an autonomous system my include at least on of steering command, which adjusts the system's direction; acceleration command, which increases the system's speed; and braking command, which decreases the system's speed or brings it to a stop. Additionally, the control command of the BMPC may include a command to control gear shifting to optimize engine performance, a command to manage throttle to regulate fuel input, and/or a command to adjust suspension settings to enhance ride comfort and stability. These commands work together to ensure the vehicle operates safely, efficiently, and smoothly under various driving conditions.

The successive control intervals refer to the discrete time steps at which the BMPC updates its control commands, such as every 50 milliseconds, 100 milliseconds, 1 second, or 5 seconds, depending on the system's requirements and the complexity of the environment. The control time horizon is the total duration over which the BMPC plans and optimizes its control strategy, which could range from a few seconds to several minutes. For example, a control time horizon might be 10 seconds, during which the BMPC generates control commands at 1-second intervals, allowing the autonomous system to navigate dynamically and respond to changes in real-time.

The method 400 comprises obtaining 410, for each control interval of the control time horizon, candidate navigation corridors 250, 260, 510 for the autonomous system.

For example, obtaining, for each control interval of the control time horizon, candidate navigation corridors for the autonomous system, may comprise using a multimodal transformer to generate candidate trajectories for the autonomous system, for instance as explained with regard to Fig. 1, 2 and 3 of the present disclosure; and using a forward reachability analysis or a simplified (e.g. using zonotopes) reachability analysis of the candidate trajectories to generate candidate navigation corridors for the candidate trajectories, for instance as explained with regard to Fig. 1, 2 and 3 of the present disclosure. The candidate navigation corridors may be the relevant corridors 250 and 260 previously explained in relation to Fig. 1, 2 and 3 of the present disclosure.

Step 420 of method 400 comprises obtaining, using backward reachability analysis, respective backward reachable navigation corridors 520 for at least two of the candidate navigation corridors.

Since not all candidate navigation corridors (e.g. which may be forward reachable using forward reachability analysis) are necessarily backward reachable due to various constraints and potential obstacles in the environment. Backward reachability analysis involves tracing the possible paths that the autonomous system can take in reverse, starting from a target state and moving backward in time. This process helps identify which corridors can be safely navigated to reach the desired state. However, some candidate corridors may encounter obstacles, dynamic changes, or other constraints that make them infeasible when traced backward, thus not all candidate corridors will be backward reachable.

The navigation corridors that are determined to be backward reachable are considered for further analysis and refinement. This ensures that the autonomous system focuses on feasible and safe paths, enhancing the reliability of the control strategy. The backward reachable corridors are identified using backward reachability analysis, which evaluates the potential paths and eliminates those that cannot be safely navigated. This process helps in narrowing down the candidate corridors to those that are viable for the autonomous system to follow.

To simplify the backward reachability analysis, techniques such as using zonotopes can be employed, for instance as explained with regard to method 100 and Fig. 1, 2 and 3 above. Zonotopes provide a computationally efficient way to represent and analyze the reachable sets, reducing the complexity of the calculations. By using simplified backward reachability analysis, the method can quickly and effectively determine the backward reachable navigation corridors, ensuring that the autonomous system operates within safe and feasible boundaries while optimizing its control strategy.

Step 430 of method 300 involves obtaining, for each control interval, a highest-progress corridor 530 and a lowest-progress corridor 540 from the backward reachable navigation corridors, wherein the highest-progress corridor is associated with the backward reachable navigation corridor where the autonomous system makes most longitudinal progress, and the lowest-progress corridor is associated with the backward reachable navigation corridor where the autonomous system makes least longitudinal progress.

For example, the highest-progress corridor may represent the backward reachable navigation corridor where the autonomous system makes the most longitudinal progress within a given control interval. This highest-progress corridor may be crucial for scenarios where the vehicle needs to maximize its forward movement, such as during overtaking or crossing. For example, when overtaking another vehicle on a highway, the highest-progress corridor would be the path that allows the autonomous vehicle to safely and efficiently pass the slower vehicle while maintaining a higher speed and making significant forward progress. This corridor ensures that the vehicle can complete the overtaking maneuver within the shortest possible distance and time, while still adhering to safety constraints.

On the other hand, the lowest-progress corridor may be the backward reachable navigation corridor where the autonomous system makes the least longitudinal progress within the same control interval. This corridor is important for situations where the vehicle needs to proceed cautiously, such as when not overtaking or when navigating through a complex or congested area. For instance, if the vehicle is traveling through a narrow urban street with parked cars and pedestrians, the lowest-progress corridor would be the path that prioritizes safety over speed, ensuring the vehicle does not overtake and moves slowly and carefully to avoid any potential collisions. This corridor helps the vehicle maintain a safe and controlled pace, minimizing risks while navigating through challenging environments.

Step 440 of method 400 comprises identifying, for each control interval, an intersection corridor 550 between the highest-progress corridor and the lowest-progress corridor, wherein the intersection corridor is used by the BMPC to dynamically adjust its control commands, ensuring the autonomous system operates within safe and efficient bounds during each control interval.

For example, the intersection corridor may be the overlap of the longitudinal progress, lateral progress, or both. For instance, the intersection corridor may be determined using methods such as Intersection over Union (IoU), which calculates the ratio of the area of overlap to the area of union of the two corridors. For example, if the highest-progress corridor spans from 10 to 50 meters longitudinally and 2 to 4 meters laterally, and the lowest-progress corridor spans from 20 to 40 meters longitudinally and 1 to 3 meters laterally, the intersection corridor would be the overlapping region from 20 to 40 meters longitudinally and 2 to 3 meters laterally. Alternatively, the longitudinal and lateral ranges where the two corridors overlap can be identified by comparing their boundaries. This involves determining the common longitudinal (forward and backward) and lateral (side-to-side) ranges where both corridors exist simultaneously. The resulting intersection corridor represents the safe and feasible path that balances the need for progress with the constraints of safety.

For example, the identified intersection corridor may then be used by the BMPC to dynamically adjust its control commands. By focusing on this intersection corridor, the BMPC ensures that the autonomous system operates within the safest and most efficient bounds during each control interval. For instance, if the vehicle is navigating a busy highway and the intersection corridor indicates a safe lane change, the BMPC will adjust the steering and acceleration commands to execute the lane change smoothly. Conversely, if the intersection corridor suggests maintaining the current lane due to overlapping safety constraints, the BMPC will modulate the braking and throttle to keep the vehicle within the safe zone. This dynamic adjustment helps the vehicle navigate complex environments, handle uncertainties, and respond to real-time changes in the surroundings, ensuring both safety and efficiency in its operation.

In embodiments, using, by the BMPC, the intersection between the highest-progress corridor and the lowest-progress corridor comprises translating the intersection corridor into convex constraints for the BMPC.

This convexification in BMPC helps speed up convergence and ensures global optimality by transforming the problem into a convex one. This eliminates the risk of getting stuck in local minima, allowing the optimization solver to quickly and reliably find the best solution for the vehicle's trajectory in real-time decision-making tasks.

In embodiments, translating the intersection corridor into convex constraints for the BMPC may comprise: expressing a lateral boundary and a longitudinal boundary of said intersection corridor in Frenet coordinates, for obtaining simplified lateral and longitudinal boundaries; converting the simplified longitudinal boundary into a first inequality constraint for longitudinal progress; converting the simplified lateral boundary into a second inequality constraint for lateral deviation; and including the first and second inequality constraints in a BMPC optimization problem, for instance as explained in detail above in relation to method 100 and Fig. 1, 2, and 3 of the present disclosure.

In embodiments, the intersection corridor may be used by the BMPC in at least one of the following ways: 1. Decision making: The intersection corridor provides a clear framework for making decisions. When the autonomous system is within the intersection, it indicates a safe zone where decisions can be postponed. This helps the BMPC decide whether to continue with the current plan or consider alternative actions. 2. Adaptive control: The BMPC uses the intersection corridor to adapt its control strategy dynamically. If the vehicle is within the intersection, the BMPC can maintain its current trajectory. If the vehicle approaches the boundary of the intersection, the MPC can decide to branch to a different control strategy to ensure safety and progress. 3. Risk management: The intersection helps the BMPC manage risks by defining the safe operational boundaries. By staying within the intersection, the vehicle minimizes the risk of encountering obstacles or unsafe conditions. 4. Timing of branching: The intersection determination helps the BMPC decide the optimal time to branch. If the vehicle is within the intersection, the BMPC can delay branching until it is necessary. This allows the vehicle to make more informed decisions based on the latest available data. 5. Resource allocation: The intersection helps the BMPC allocate computational and operational resources more efficiently. By focusing on the intersection, the BMPC can avoid unnecessary calculations for areas outside the safe zone, leading to more efficient use of resources.

Overall, the intersection determination may be a critical component of the BMPC, enabling it to make safe, efficient, and adaptive decisions based on the autonomous system's current and projected positions.

In embodiments, the method 400, may further comprise: obtaining, for the highest-progress corridor, a first earliest control interval where the autonomous system must increase its velocity to stay within a lower bound of the highest-progress corridor at a first successive control interval; and obtaining, for the lowest-progress corridor, a second earliest control interval where the autonomous system must decrease its velocity to stay within an upper bound of the lowest-progress corridor at a second successive control interval.

By obtaining the first earliest control interval where the autonomous system must increase its velocity to stay within the lower bound of the highest-progress corridor, the system ensures that it maintains optimal speed for efficient progress. Similarly, determining the second earliest control interval where the system must decrease its velocity to stay within the upper bound of the lowest-progress corridor helps in maintaining safety and preventing overshooting. These steps enable the BMPC to dynamically adjust the vehicle's speed in real-time, ensuring that it remains within the safe and efficient operational boundaries defined by the intersection corridor. This leads to improved responsiveness to changing conditions, enhanced safety by avoiding potential collisions, and optimized performance by balancing speed and caution effectively.

In embodiments, the lower bound of the highest-progress corridor is determined based on the autonomous system's current position, velocity, and/or maximum acceleration, and the upper bound of the lowest-progress corridor is determined based on the autonomous system's current position, velocity, and/or maximum deceleration.

Determining the lower bound of the highest-progress corridor based on the autonomous system's current position, velocity, and maximum acceleration ensures that the vehicle can achieve the necessary speed to stay within the optimal path for progress. Similarly, determining the upper bound of the lowest-progress corridor based on the current position, velocity, and maximum deceleration ensures that the vehicle can safely reduce speed to avoid overshooting the safe path. These calculations allow the BMPC to dynamically adjust control commands, optimizing the vehicle's acceleration and deceleration to maintain safe and efficient navigation. This approach enhances the system's responsiveness, safety, and overall performance by ensuring that the vehicle operates within the most effective and secure boundaries at all times.

In embodiments, method 400 may further comprise: for the highest-progress corridor, obtaining, for each control interval preceding the first earliest control interval, a minimum velocity needed to ensure the autonomous system can reach the lower bound of the highest-progress corridor at the first earliest control interval; and for the lowest-progress corridor, obtaining, for each control interval preceding the first earliest control interval, a maximum velocity needed to ensure the autonomous system stays within an upper bound of the lowest-progress corridor at the second earliest control interval.

By obtaining the minimum velocity needed for each control interval preceding the first earliest control interval, the system ensures that the autonomous vehicle can reach the lower bound of the highest-progress corridor on time, optimizing its speed for efficient progress. This proactive speed adjustment helps in maintaining momentum and avoiding delays. Similarly, determining the maximum velocity for each control interval preceding the second earliest control interval ensures that the vehicle stays within the upper bound of the lowest-progress corridor, preventing overshooting and maintaining safety. These steps enable the BMPC to fine-tune the vehicle's speed dynamically, ensuring it operates within safe and efficient boundaries. This leads to improved responsiveness, enhanced safety by avoiding potential collisions, optimized performance through balanced speed control, and better overall navigation accuracy and reliability.

In embodiments, the method 400 may further comprise: for each control interval preceding a larger of the first earliest control interval and the second earliest control interval, checking if there is a feasible position-velocity combination that satisfies constraints for both the highest-progress corridor and the lowest-progress corridor; and identifying a third earliest control interval where there is no feasible position-velocity that satisfies the constraints for both the highest-progress corridor and the lowest-progress corridor, wherein the third earliest control interval is indicative of an optimal decision postponing time where the autonomous system can no longer stay within both highest and lowest-progress corridors simultaneously.

By checking for each control interval preceding the larger of the first earliest control interval and the second earliest control interval, the system ensures that there is a feasible position-velocity combination that satisfies the constraints for both the highest-progress and lowest-progress corridors. This step helps in maintaining the balance between progress and safety, as it verifies that the vehicle can operate within the defined safe boundaries while making optimal progress. It helps in dynamically adjusting the control commands to ensure that the vehicle remains on a feasible path, thereby enhancing the reliability and robustness of the autonomous system.

Identifying the third earliest control interval where there is no feasible position-velocity combination that satisfies the constraints for both corridors helps improve decision-making. This interval indicates the optimal decision postponing time, beyond which the autonomous system can no longer stay within both the highest and lowest-progress corridors simultaneously. This information may be helpful for the BMPC, as it provides a clear threshold for when a decision must be made to either change the control strategy or take corrective actions. It ensures that the system does not delay decisions beyond a safe point, thereby preventing potential risks and ensuring continuous safe operation. These steps collectively enhance the system's ability to make timely and informed decisions, optimize control strategies, and maintain a high level of safety and efficiency in dynamic environments.

In embodiments, checking if there is a feasible position-velocity combination that satisfies the constraints for both the highest-progress corridor and the lowest-progress corridor comprises: using, at a current control interval, a current position and velocity of the autonomous system to predict the autonomous system's position at a successive control interval (e.g. using a kinematic equation or a machine learning model); checking if a first constraint is satisfied for the highest-progress corridor by checking if said predicted position meets or exceeds the lower bound of the highest-progress corridor at the successive control interval; checking if a second constraint is satisfied for the lowest-progress corridor by checking if said predicted position does not exceed the upper bound of the lowest-progress corridor at the successive control interval; if both the first and second constraints are satisfied, identifying that there is a feasible position-velocity combination that satisfies the constraints for both the highest-progress corridor and the lowest-progress corridor; and if only one of the first and second constraints is satisfied, identifying that there is no position-velocity combination that satisfies the constraints for both the highest-progress corridor and the lowest-progress corridor.

By using the current position and velocity of the autonomous system to predict its future position, the system can accurately forecast its trajectory and make informed decisions. Checking if the predicted position meets the lower bound of the highest-progress corridor ensures that the vehicle can maintain optimal progress, while verifying that it does not exceed the upper bound of the lowest-progress corridor ensures safety by preventing overshooting. If both constraints are satisfied, the system identifies a feasible position-velocity combination, allowing it to proceed confidently. Conversely, if only one constraint is met, the system recognizes the need for adjustment, preventing potential risks. These steps enhance the system's ability to dynamically balance progress and safety, optimize control strategies, and ensure reliable and efficient navigation in real-time.

In embodiments, the method 400 may further comprise: for the third earliest control interval: determining a lane change time based on a lateral distance and a maximum lateral acceleration; checking if lateral corridors overlap, comprising: checking if the autonomous system's predicted lateral position during a lane change falls within lateral corridor bounds, wherein the lateral corridor bounds comprise a minimum lateral distance and a maximum lateral distance, wherein the minimum lateral distance is a closest position to a lane boundary that the autonomous system can safely occupy in a current lane, and the maximum lateral distance is a farthest position from a lane boundary that the vehicle can safely occupy in a target lane; if the lateral corridors do not overlap, adjusting the lane change time by moving to a preceding control interval; rechecking if the lateral corridors overlap, and if they don't overlap, readjusting the lane change time by moving to a preceding control interval until overlap is achieved; and identifying the preceding control interval where overlap is achieved as the maximum decision postponing time.

Accordingly, for the third earliest control interval, the method may first determine a lane change time based on the lateral distance the vehicle needs to travel and its maximum lateral acceleration. This calculation ensures that the vehicle can safely and efficiently change lanes within the given constraints. The lane change time may be used for planning the maneuver and ensuring that the vehicle can complete the lane change without exceeding its lateral acceleration limits, which could compromise safety or stability.

Next, the method may check if the lateral corridors overlap by predicting the vehicle's lateral position during the lane change and comparing it to the lateral corridor bounds. The lateral corridor bounds may include a minimum lateral distance, which is the closest position to a lane boundary that the vehicle can safely occupy in the current lane, and a maximum lateral distance, which is the farthest position from a lane boundary that the vehicle can safely occupy in the target lane. This step ensures that the vehicle's predicted path during the lane change remains within safe and feasible limits.

If the lateral corridors do not overlap, indicating that the predicted lane change path is not feasible, the system adjusts the lane change time by moving to a preceding control interval. This adjustment involves recalculating the lane change time and rechecking the lateral corridors for overlap. The process is repeated iteratively, moving to earlier control intervals and adjusting the lane change time until the lateral corridors overlap, ensuring a feasible and safe lane change path. In embodiments, if no such overlap is possible in any control interval, the lane change may not occur.

Once the lateral corridors overlap, the method may identify the control interval where this overlap is achieved as the maximum decision postponing time. This interval represents the latest point at which the system can safely decide to initiate the lane change. By determining this maximum decision postponing time, the system ensures that it can make timely and informed decisions, optimizing the vehicle's control strategy and maintaining safety and efficiency during lane changes. This approach enhances the autonomous system's ability to navigate complex environments and respond dynamically to real-time conditions.

In embodiments, the maximum decision postponing time may be used by the BMPC, for instance to ensure that control decisions are made at the latest possible moment while still maintaining safety and efficiency. This time acts as a critical threshold, indicating the last safe point at which the system can decide to initiate a lane change or another maneuver. By knowing this time, the BMPC can delay decisions to gather more information and better assess the situation, leading to more informed and optimal control actions.

For example, if the vehicle is approaching a congested area and needs to change lanes, the BMPC uses the maximum decision postponing time to determine the latest moment it can safely start the lane change. This allows the system to wait for the best opportunity, such as a gap in traffic, before committing to the maneuver. By doing so, the BMPC maximizes the vehicle's progress and safety, ensuring that decisions are made with the most up-to-date information and within the safest operational boundaries. This approach enhances the overall performance and reliability of the autonomous system, allowing it to navigate complex environments

**EP 4 786 294 A1**

more effectively.

In embodiments, the maximum decision postponing time may be used by the BMPC to update its current or previous decision postponing or branching time. For instance, if the BMPC's current or previous decision postponing time or branching time is lower than said maximum decision postponing time, the BMPC may keep its current or previous decision postponing time or branching time. If said current or previous decision postponing time is not lower than said maximum decision postponing time, the BMPC may reduce its current or previous decision postponing time. Alternatively or additionally, if said current or previous decision postponing time is not lower than said maximum decision postponing time, different or alternative candidate navigation trajectories may be obtained and the method 400 may be repeated, or the relevant corridors 250, 260 of method 100, may be replaced with less relevant corridors, and the method 400 may be repeated.

As mentioned before with respect to method 100 and Fig. 1 to 3, the preselected corridors are selected based on the greatest cumulated area. If the maximum decision postponing time or branching time is too high the corridor with the greatest cumulated area of all preselected corridors may be potentially removed. Instead, we check whether the modes (predicted trajectories) which were covered by this corridor have alternative driving corridors (e.g. less relevant corridors as defined in relation to method 100 and Fig. 1 to 3).

In embodiments, the intersection corridor between highest- and lowest-progress corridors may be determined by first ordering the refined corridors based on their final position (e.g. their longitudinal position at the final timestep or the position that corresponds to the farthest progress along the path), and then determine the intersection (e.g. the longitudinal and lateral ranges) between the highest-progress corridor and the lowest-progress corridor of the candidate navigation corridors at each timestep. For example: the highest-progress corridor is obtained when the autonomous system (e.g. ego vehicle) accelerates to cross an intersection before the traffic participant (TP) arrives, and the lowest-progress corridor is when the autonomous system (e.g. ego vehicle) brakes to let the TP first through the intersection. Another example of highest and lowest-progress corridors is when the ego vehicle overtakes versus not overtaking a TP.

In embodiments, the highest-progress corridor according to method 400 may be defined by the maximum possible position the vehicle can reach while respecting its dynamic limits (e.g., maximum acceleration). The lower driving corridor is the region or boundary within which the vehicle must stay on the lower side of the road or lane. The lower driving corridor is defined by the minimum possible position the vehicle can occupy while respecting dynamic constraints (e.g., minimum acceleration).

In embodiments, if there is an intersection between said highest-progress and lowest-progress corridors: For the lowest-progress corridor and the highest-progress corridor: method 400 may define the lower and upper bounds (also called boundaries in this disclosure) for each one of said corridors, $x_k^{min}$ and $x_k^{max}$, at each timestep k. These bounds may evolve over time between successive control intervals as the vehicle moves.

In embodiments, method 400 may include identifying the critical timesteps. For the Lowest-progress corridor, the critical timestep $k_{lowest}$ or $k_{min}$ may be the earliest timestep where the lowest velocity is required to stay within the upper bound of the lowest-progress corridor at the next timestep. This is the timestep where the vehicle must slow down to stay within the lowest-progress corridor's bounds at the next timestep. For the highest-progress corridor, the critical timestep $k_{highest}$ or $k_{max}$ is the earliest timestep where the highest velocity is required to reach the lower bound of the highest-progress corridor at the next timestep. This is the timestep where the vehicle must speed up to stay within the highest-progress corridor's bounds at the next timestep.

In embodiments, the aim is to find the earliest timestep in the relevant forward corridor in which the states of the autonomous vehicle need to differ to be able to reach both driving corridors in future or to commit to one driving corridor. This timestep is the branching time.

In embodiments, method 400 may involve: for each critical timestep defined above, **backpropagate** the required velocity constraints to earlier timesteps, considering the refined corridors and the vehicle's dynamics. This may comprises the following steps: For the highest-progress corridor: Starting from the critical timestep $k_{highest}$ of the highest-progress corrido , calculate the minimum velocity $v_k^{min}$ needed at timestep k to ensure the vehicle can reach the lower bound $x_{k+1}^{min}$ of the highest-progress corridor at timestep k+1. The kinematic equation may be used to backpropagate the velocity:

$$v_k^{min} \geq \frac{(x_{k+1}^{min} - x_k - 0.5 * a_{max} * dt^2)}{dt}$$

This gives the **minimum velocity** required at timestep k to ensure that the vehicle can reach the lower bound of the highest-progress corridor in the next timestep.

For instance, if the position of the vehicle is on the lower bound $x_k^{min}$ of the highest-progress corridor, the minimum velocity needs to be $v_k^{min} = \frac{(x_{k+1}^{min} - x_k^{min} - 0.5 * a_{max} * dt^2)}{dt}$ to reach at least the lower bound $x_{k+1}^{min}$ in the next timestep. On the other hand if the current position is on the upper bound $x_k^{max}$ of the highest-progress corridor, the minimum velocity needs $v_k^{min} = \frac{(x_{k+1}^{min} - x_k^{max} - 0.5*a_{max}*dt^2)}{dt}$ is enough to reach the upper bound $x_{k+1}^{min}$ in the next timestep.

In embodiments, method 400 may comprise: for the lowest-progress corridor: starting from the critical timestep $k_{lowest}$ of the lowest-progress corridor, calculate the maximum velocity $v_k^{max}$ needed at timestep k to ensure the vehicle stays within the upper boundary of the lower corridor at timestep k+1. The kinematic equation may be used to backpropagate the velocity:

$$v_k^{max} \leq \frac{(x_{k+1}^{min} - x_k - 0.5 * a_{max} * dt^2)}{dt}$$

This gives the **maximum velocity** required at timestep k to ensure that the vehicle can stay within the upper bound of the lowest-progress corridor at timestep k+1.

In embodiment, method 400 may include: at each timestep k, check if there is a feasible position-velocity combination that satisfies the constraints for both the lowest-progress and highest-progress (driving) corridors. For the highest-progress corridor, check if the position $x_k$ and velocity $v_k$ combination allows the vehicle to stay within at least the lower boundary at the next timestep, and for the lowest-progress corridor, check if the position $x_k$ and velocity $v_k$ combination allows the vehicle to stay within the upper boundary at the next timestep. This ensures that at each timestep, the position and velocity combination lies within both the upper and lower corridor constraints.

In embodiments, method 400 may include: determine the branching time as the first timestep where there is no overlap (one of the if conditions above is not true - the upper and lower driving corridors no longer overlap) between the feasible position-velocity combinations for the highest and lowest-progress corridors. This means that at this first timestep, the vehicle can no longer stay within both corridors due to dynamic constraints such as maximum acceleration and deceleration limits. Accordingly, the branching time is the point where the vehicle must choose between two trajectories because it can no longer stay within both corridors simultaneously. This is the maximum decision postponing if we only consider longitudinal motion.

In embodiments, method 400 may account for the lateral motion (for lane changes). Said method may use the maximum decision postponing time calculated before and may check the overlap for this timestep and

for the $k_{lc} = \frac{\sqrt{4*d_1/a_{max}}}{dt}$ next timesteps (minimum time required for lane change) and reduce the time until overlap between corridors is achieved.

For example, the branching time for the longitudinal motion may be determined as discussed above (using highest and lowest-driving corridors) by checking the intersection between the corridors at each timestep and performing backpropagation of velocity constraints. Next, the minimum lane change time can be calculated for lane change ($k_{1c}$) based on the lateral distance $d_1$ and the maximum lateral acceleration $a_{max}$, as given by

$$k_{lc} = \frac{\sqrt{4*d_1/a_{max}}}{dt} .$$

Subsequently, the overlap of lateral upper and lower corridors may be checked by method 400. For instance, for each timestep from the previously calculated maximum decision postponing, check if the lateral corridors (required for lane change) overlaps (e.g. d1_min > d2_max). If no overlap exists, reduce $k_{1c}$ and recheck until overlap is achieved, ensuring the lane change occurs within the feasible timeframe while staying within both lateral corridors bounds. The maximum decision postponing time is the latest timestep where the lane change can occur while satisfying the constraints, ensuring the vehicle can still stay within both the highest-progress and lowest-progress navigation corridors.

For example, once the maximum postponing time is determined, method 400 may check whether the optimal decision postponing time calculated by the BMPC in the current control interval or in relation with method 200 above is lower than the maximum decision postponing time, i.e. check whether the time when the uncertainty is expected to resolve is lower than the maximum possible decision time. If this condition is true method 400 can keep the preselected relevant corridors. If the maximum possible decision time is exceeded by the current decision postponing time of the BMPC, method 400 may either reduce the postponing time or replace one of the selected corridors with a more conservative alternative (e.g. with a less relevant corridor).

In embodiment, the most critical timestep (also called control interval in this disclosure) is checked, i.e. "the most difficult to reach" for the highest- and lowest progress corridors and backpropagate what the minimum and maximum velocity needs to be in the control intervals (also called timesteps in this disclosure) before to satisfy the linear constraints in these critical timesteps. The first timestep k that is obtained by backpropagating where there is a position and velocity combination that satisfies constraints inside both navigation corridors. The most critical timestep is simply for the highest-progress corridor the earliest timestep where the highest velocity is needed to reach the lower bound and for the lower driving corridor where the lowest velocity is needed to reach the upper bound.

Starting from these timesteps k_max and k_min, the backpropagation (i.e. what velocities are need to have at which position in the timesteps before) can be done via inverting the state space model (e.g. by using linear point mass model with the states) $z_k = [x_k, v_k]$,

$$z_{k-l} = A^{-(l+1)}(z_{k+1} - u_{max/min}\sum_{i=0}^{l} A^i B) \ .$$ For

the highest-progress navigation corridor the maximum acceleration may be taken, and for the lowest-progress navigation corridor, the minimum possible acceleration may be taken.

Where A is the state transition matrix, B is the control matrix, and 1 is the number of timesteps to backpropagate. $A^{-(l+1)}$ is the inverse of the matrix A raised to the power (1 +1), effectively reversing the system dynamics over the specified number of steps. $z_{k+1}$ is the state at timestep k+1, where the velocity constraints are known (e.g. $v_{k+1}^{min}$ and $v_{k+1}^{max}$). $u_{max/min}$ is the control input (either the maximum or minimum acceleration/deceleration depending on the corridor).

For example, the backpropagation may be performed using the following steps: Determine $z_{k+1}$: Start with the state vector at timestep k+1, which corresponds to the previously calculated maximum and minimum position and velocity. Compute the correction term:

The term $\sum_{i=0}^{l} A^i B$ represents the accumulated effect of control inputs over the past l timesteps. For each timestep, you compute the contribution of the control inputs (acceleration/deceleration) using the system dynamics matrices. Apply the inversion: Using the state transition matrix $A^{-(l+1)}$ backpropagate the required state $z_k = [x_k, v_k]$ to the earlier timestep k-l. Repeat for each timestep: Continue this process for each timestep, backpropagating from the critical timestep $k_{max}$ or $k_{min}$ until you reach the beginning of the prediction horizon.

After backpropagating the required velocities $v_k^{min}$ and $v_k^{max}$ for each timestep, check if the position-velocity combinations stay within the feasible bounds of both the highest-progress navigation corridor and lowest-progress navigation corridors at each timestep (also called control interval). If the position-velocity combinations do not intersect at any timestep, the autonomous system must branch to one of the predicted trajectories. The branching time is the first timestep where the autonomous system can no longer stay within both corridors.

This equation may be used to calculate the linear inequality constraints that need to be satisfied for the highest-progress navigation corridor and lowest-progress navigation corridor in the previous timesteps. First, these constraints may be calculated up to the last timestep where there is no intersection (i.e. l=k_max/min-k_i). Afterwards, backpropagating from k_i to 1 we need to check in each timestep whether there is position-velocity combination that satisfies all given constraints (i.e., reachable velocity in this timestep, current linear constraints and backpropagated linear constraints for the highest-progress navigation corridor and lowest-progress navigation corridor). The first timestep which satisfies these conditions may be the maximum possible decision postponing time.

Hence, the proposed method backpropagates the possible position-velocity combinations in which the autonomous system stays in the intersection corridor and check at which timestep there is an intersection between the position-velocity combination. For each driving corridor the maximum and minim speed in each timestep to stay in the intersection corridor in the next timestep can be calculated. For the highest-progress navigation corridor (i.e. requiring faster progress), the minimum velocity to be able to stay in the driving corridor bounds is calculated, and for the lower driving corridor the maximum allowable velocity is calculated.

In the present disclosure, any feature described in an embodiment, example, and/or method (e.g. method 100, 400) or method step, may be combined with any feature of another embodiment, example, and/or method step, unless otherwise specified.

Fig. 6 schematically illustrates a block diagram of an embodiment of an apparatus 600 comprising one or more interfaces 610 for communication and one or more processors or data processing circuits 620 configured to execute any one of the methods described herein.

In embodiments, the apparatus may further comprise a memory or a storage medium 630. A storage medium 630 (or a data carrier, or a computer-readable data carrier, or a computer-readable medium) may comprise, stored thereon, a computer program or computer-executable instructions for performing one of the methods described herein when it is performed by one or more processors 620. The processors 620 may communicate with the storage medium 630 directly and/or via the one or more interfaces 610.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programmable gate arrays, one or more central and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

Some or all of the method steps described above with regard to Figures 1-3 may be implemented by a computer in that they are executed by (or using) a processor, a microprocessor, an electronic circuit, or the data processing circuit 620. For example, the implementation can be performed using a non-transitory storage medium such as a computer-readable storage medium or data carrier. Such computer-readable media include any media that can be accessed by either a general-purpose or a specialized computer system.

Furthermore, any component of apparatus 600 may be embedded locally on the autonomous system or may be located in the cloud. For instance, the data processing circuit (620) can be located in an edge device of the autonomous system, in the cloud (e.g., a digital twin), or partially in both. Edge devices, equipped with edge AI capabilities, can perform real-time data processing and decision-making close to the source of data, reducing latency and improving response times. This is particularly helpful for autonomous systems that require immediate reactions to dynamic environments.

The cloud component can leverage high-performance computing (HPC) resources and advanced machine learning models for more complex computations that are not time-sensitive. By utilizing cloud-based digital twins, which are virtual replicas of physical systems, the autonomous system can simulate various scenarios and optimize its performance based on real-time data and predictive analytics. This hybrid approach ensures that the system can handle both real-time processing and complex computations efficiently.

Additionally, the integration of 5G/6G technology (e.g. in communication interfaces 610) can further enhance this setup by providing high-speed, low-latency communication between the edge devices and the cloud. This ensures seamless data transfer and synchronization, enabling the autonomous system to make informed decisions quickly and accurately.

In summary, by combining edge AI, HPC, digital twins, and 5G/6G technology, the implementation of these methods becomes more robust, scalable, and efficient. This hybrid architecture not only enhances the performance and decision-making capabilities of the autonomous system but also ensures that it can adapt to various dynamic environments and scenarios effectively.

The apparatus 600 may also include a cloud implementation, which enhances its capabilities by leveraging cloud-based resources. This cloud implementation comprises several key components. The cloud implementation may comprise cloud interfaces 610' designed for communication between the local apparatus and the cloud. These interfaces enable data transfer, remote access, and integration with cloud services, ensuring seamless connectivity.

Additionally, the cloud implementation may include cloud processors or data processing circuits 620'. These may be processing units located in the cloud, configured to execute any of the methods described for the apparatus. By utilizing cloud processors, the system can handle more complex computations and larger datasets without being limited by the local hardware's capabilities. This allows for greater flexibility and efficiency in processing tasks, as well as the ability to dynamically scale resources based on demand.

Furthermore, the cloud implementation may include a cloud memory or storage medium 630' that may be responsible for storing data, datasets, and program/method code in the cloud. Cloud storage offers scalability, redundancy, and accessibility, ensuring that data is securely stored and can be accessed from anywhere. This enhances the overall reliability and availability of the system, providing robust data protection and disaster recovery options.

The cloud implementation allows for flexibility in how the methods disclosed herein are executed. Specifically, any of the methods described herein can be partially executed in the cloud, where some parts of the method may be processed locally (e.g. on an edge device) while others are offloaded to the cloud. This hybrid approach optimizes performance and resource utilization by balancing the load between local and cloud resources. Alternatively, the entire method can be fully executed in the cloud, leveraging the cloud's extensive computational power and storage capabilities. This dual implementation (local and cloud) ensures that the apparatus can efficiently handle a wide range of tasks, from simple local processing to complex cloud-based computations, providing a robust and scalable solution that can adapt to varying workloads and operational requirements.

**Claims**

1. A method for autonomous navigation using a branch model predictive control, BMPC, the BMPC being configured to generate control commands to an autonomous system over successive control intervals, the method comprising:

   obtaining (410), for each control interval, candidate navigation corridors (250, 260, 510) for the autonomous system;
   obtaining (420), using backward reachability analysis, respective backward reachable navigation corridors (520) for at least two of the candidate navigation corridors;
   obtaining (430), for each control interval, a highest-progress corridor (530) and a lowest-progress corridor (540) from the backward reachable navigation corridors, wherein the highest-progress corridor is associated with the backward reachable navigation corridor where the autonomous system makes most longitudinal progress, and the lowest-progress corridor is associated with the backward reachable navigation corridor where the autonomous system makes least longitudinal progress; and identifying (440), for each control interval, an intersection corridor (550) between the highest-progress corridor and the lowest-progress corridor, wherein the intersection corridor is used by the BMPC to dynamically adjust its control commands, ensuring the autonomous system operates within safe and efficient bounds during each control interval.

2. The method of claim 1, further comprising:

obtaining, for the highest-progress corridor, a first earliest control interval where the autonomous system must increase its velocity to stay within a lower bound of the highest-progress corridor at a first successive control interval; and obtaining, for the lowest-progress corridor, a second earliest control interval where the autonomous system must decrease its velocity to stay within an upper bound of the lowest-progress corridor at a second successive control interval.

3. The method of claim 2, further comprising:

for the highest-progress corridor, obtaining, for each control interval preceding the first earliest control interval, a minimum velocity needed to ensure the autonomous system can reach the lower bound of the highest-progress corridor at the first earliest control interval; and for the lowest-progress corridor, obtaining, for each control interval preceding the first earliest control interval, a maximum velocity needed to ensure the autonomous system stays within an upper bound of the lowest-progress corridor at the second earliest control interval.

4. The method of claim 3, further comprising:

for each control interval preceding a larger of the first earliest control interval and the second earliest control interval, checking if there is a feasible position-velocity combination that satisfies constraints for both the highest-progress corridor and the lowest-progress corridor; and identifying a third earliest control interval where there is no feasible position-velocity that satisfies the constraints for both the highest-progress corridor and the lowest-progress corridor, wherein the third earliest control interval is indicative of a decision postponing time where the autonomous system can no longer stay within both highest and lowest-progress corridors simultaneously.

5. The method of any one of claims 2 to 4, wherein the lower bound of the highest-progress corridor is determined based on the autonomous system's current position, velocity, and/or maximum acceleration, and the upper bound of the lowest-progress corridor is determined based on the autonomous system's current position, velocity, and/or maximum deceleration.

6. The method of any claims 4 or 5, wherein checking if there is a feasible position-velocity combination that satisfies the constraints for both the highest-progress corridor and the lowest-progress corridor comprises:

using, at a current control interval, a current position and velocity of the autonomous system to predict the autonomous system's position at a successive control interval; checking if a first constraint is satisfied for the highest-progress corridor by checking if said predicted position meets or exceeds the lower bound of the highest-progress corridor at the successive control interval; checking if a second constraint is satisfied for the lowest-progress corridor by checking if said predicted position does not exceed the upper bound of the lowest-progress corridor at the successive control interval; if both the first and second constraints are satisfied, identifying that there is a feasible position-velocity combination that satisfies the constraints for both the highest-progress corridor and the lowest-progress corridor; and if only one of the first and second constraints is satisfied, identifying that there is no position-velocity combination that satisfies the constraints for both the highest-progress corridor and the lowest-progress corridor.

7. The method of any one of claims 4 to 6, further comprising:
for the third earliest control interval:

determining a lane change time based on a lateral distance and a maximum lateral acceleration; checking if lateral corridors overlap, comprising:

checking if the autonomous system's predicted lateral position during a lane change falls within lateral corridor bounds, wherein the lateral corridor bounds comprise a minimum lateral distance and a maximum lateral distance, wherein the minimum lateral distance is a closest position to a lane boundary that the autonomous system can safely occupy in a current lane, and the maximum lateral distance is a farthest position from a lane boundary that the vehicle can safely occupy in a target lane;

if the lateral corridors do not overlap, adjusting the lane change time by moving to a preceding control interval;

rechecking if the lateral corridors overlap, and if they don't overlap, readjusting the lane change time by moving to a preceding control interval until overlap is achieved; and

identifying the preceding control interval where overlap is achieved as the maximum decision postponing time.

8. The method of any previous claim, wherein obtaining, for each control interval of the control time horizon, candidate navigation corridors for the autonomous system, comprises:

   using a multimodal transformer to generate candidate trajectories for the autonomous system; and

   using a forward reachability analysis of the candidate trajectories to generate candidate navigation corridors for the candidate trajectories.

9. The method of any previous claim, wherein obtaining, using backward reachability analysis, respective backward reachable navigation corridors for at least two of the candidate navigation corridors comprises using zonotope-based simplified backward reachability analysis.

10. The method of any previous claim, wherein using, by the BMPC, the intersection between the highest-progress corridor and the lowest-progress corridor comprises translating the intersection corridor into convex constraints for the BMPC.

11. A computer program comprising instructions which, when the computer program is executed by a computer, cause the computer to carry out a method of any one of the preceding claims.

12. A computer-readable data carrier having stored thereon the computer program of claim 11.

13. An apparatus (600) comprising:

    one or more interfaces (610) for communication;
    a memory (630); and
    a data processing circuit (620) configured to carry out the method of any one of claims 1 to 10.

# FIG 1

100

obtaining, from a multimodal predictor, one or more candidate trajectories for traffic participants ——110

obtaining, using reachability analysis, respective candidate navigation corridors for each candidate trajectory ——120

obtaining, for each candidate trajectory, a cumulated area of each of the respective candidate navigation corridors ——130

classifying, for each candidate trajectory, a candidate navigation corridor having a greatest cumulated area as relevant corridor, thereby obtaining a class of relevant corridors ——140

obtaining an overlap score between each pair of relevant corridors in the class of relevant corridors ——150

determining that at least one obtained overlap score, corresponding to at least one pair of the relevant corridors, exceeds a predetermined threshold ——160

replacing, in the class of relevant corridors, each pair of the at least one pair of the relevant corridors with an intersection of said each pair, thereby obtaining an updated class of relevant corridors. ——170

using, by a branch model predictive control, BMPC, the updated class of relevant corridors for generating a predicted trajectory and control commands to an autonomous system ——180

FIG 2

**FIG 3**

EP 4 786 294 A1

# FIG 4

400

| obtaining, for each control interval, candidate navigation corridors for the autonomous system | 410 |

| obtaining, using backward reachability analysis, respective backward reachable navigation corridors for at least two of the candidate navigation corridors | 420 |

| obtaining, for each control interval, a highest-progress corridor and a lowest-progress corridor from the backward reachable navigation corridors, wherein the highest-progress corridor is associated with the backward reachable navigation corridor where the autonomous system makes most longitudinal progress, and the lowest-progress corridor is associated with the backward reachable navigation corridor where the autonomous system makes least longitudinal progress | 430 |

| identifying, for each control interval, an intersection corridor between the highest-progress corridor and the lowest-progress corridor, wherein the intersection corridor is used by the BMPC to dynamically adjust its control commands, ensuring the autonomous system operates within safe and efficient bounds during each control interval | 440 |

FIG 5

FIG 6

Europäisches Patentamt

European Patent Office

Office européen des brevets

# EUROPEAN SEARCH REPORT

**Application Number**

EP 25 22 0863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MOHAMED-KHALIL BOUZIDI ET AL: "Motion Planning under Uncertainty: Integrating Learning-Based Multi-Modal Predictors into Branch Model Predictive Control", ARXIV.ORG CORNELL UNIVERSITY LIBRARY, 201 OLIN LIBRARY CORNELL UNIVERSITY ITHACA, NY 14853, 6 May 2024 (2024-05-06), XP091749059, * the whole document * | 1-13 | INV. B60W30/095 B60W60/00 |
| A | LIU YIPING ET AL: "Spatiotemporal Trajectory Planning for Autonomous Vehicle Based on Reachable Set and Iterative LQR", IEEE TRANSACTIONS ON VEHICULAR TECHNOLOGY IEEE, USA, vol. 73, no. 8, 27 February 2024 (2024-02-27), pages 10932-10947, XP011979369, ISSN: 0018-9545, DOI: 10.1109/TVT.2024.3371184 [retrieved on 2024-02-28] * abstract * * II. SYSTEM OVERVIEW * | 1-13 | |
| A | FORS VICTOR ET AL: "Resilient Branching MPC for Multi-Vehicle Traffic Scenarios Using Adversarial Disturbance Sequences", IEEE TRANSACTIONS ON INTELLIGENT VEHICLES IEEE, vol. 7, no. 4, 18 April 2022 (2022-04-18), pages 838-848, XP011930551, ISSN: 2379-8858, DOI: 10.1109/TIV.2022.3168772 [retrieved on 2022-04-19] * abstract * * Sections I - V * | 1-13 | |

**TECHNICAL FIELDS SEARCHED (IPC)**

B60W

-/--

The present search report has been drawn up for all claims

| Place of search | Date of completion of the search | Examiner |
|---|---|---|
| Munich | 5 May 2026 | Elbel, Benedikte |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 22 0863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUYAO ZHANG ET AL: "An Efficient Risk-aware Branch MPC for Automated Driving that is Robust to Uncertain Vehicle Behaviors", ARXIV.ORG CORNELL UNIVERSITY LIBRARY, 201 OLIN LIBRARY CORNELL UNIVERSITY ITHACA, NY 14853, 27 March 2024 (2024-03-27), XP091712220, * Abstract and Introduction * ----- | 1-13 | |
| A | CHEN YUXIAO ET AL: "Interactive Multi-Modal Motion Planning With Branch Model Predictive Control", IEEE ROBOTICS AND AUTOMATION LETTERS, vol. 7, no. 2, 1 April 2022 (2022-04-01), pages 5365-5372, XP093394692, ISSN: 2377-3774, DOI: 10.1109/lra.2022.3156648 * abstract * ----- | 1-13 | |
| | | | TECHNICAL FIELDS SEARCHED (IPC) |

The present search report has been drawn up for all claims

| Place of search | Date of completion of the search | Examiner |
|---|---|---|
| Munich | 5 May 2026 | Elbel, Benedikte |

EPO FORM 1503 03.82 (P04C01)